# EUROPEAN PATENT APPLICATION

(11) **EP 2 754 597 A1**
(43) Date of publication of application: **16.07.2014**
(21) Application number: 12830007.6
(22) Date of filing: 05.09.2012
(51) Int. Cl.: B60W 10/10, B60K 6/48, B60K 6/547, B60L 7/16, B60L 11/14, B60W 10/18, B60W 20/00, F16H 61/02, F16H 61/21

(54) **HYBRID VEHICLE CONTROL DEVICE AND CONTROL METHOD**

(30) Priority: 05.09.2011 JP 2011193018; 05.09.2011 JP 2011193023; 05.09.2011 JP 2011193025
(71) Applicant: Honda Motor Co., Ltd., Minato-ku Tokyo 107-8556 (JP)
(72) Inventor: KAWATA, Kohei, Wako-shi Saitama 351-0193 (JP); KON, Takashi, Wako-shi Saitama 351-0193 (JP); TAKEUCHI, Masahiro, Wako-shi Saitama 351-0193 (JP); KURODA, Shigetaka, Wako-shi Saitama 351-0193 (JP); HONMA, Yuki, Wako-shi Saitama 351-0193 (JP); YAMADA, Tetsuya, Wako-shi Saitama 351-0193 (JP); YOKOO, Kentaro, Wako-shi Saitama 351-0193 (JP)
(74) Representative: Beder, Jens
(86) International application number: PCT/JP2012/072578
(87) International publication number: WO 2013/035730

(57) **Abstract**

A control system and control method for a hybrid vehicle, which properly determine based on a predicted charge amount whether or not to change a speed position, to thereby obtain a larger charge amount, thereby making it possible enhance fuel economy of the hybrid vehicle. A first charge amount is estimated which is an amount of electric power charged into a storage battery when regeneration is performed by an electric motor 4 in a state in which the speed position of a stepped transmission is held, for a predetermined regeneration time period. Further, a second charge amount is estimated which is an amount of electric power charged into the storage battery when the speed position is changed to a target speed position within the regeneration time period, and regeneration by the electric motor 4 is performed until the regeneration time period elapses. Then, it is determined based on the estimated first and second charge amounts whether to hold the speed position or to change the speed position to the target speed position.

## Description

The present invention relates to a control system and a control method for a hybrid vehicle which includes an internal combustion engine and an electric motor capable of generating electric power, as motive power sources, and includes a transmission mechanism capable of transmitting input motive power to drive wheels in a state in which a speed of the motive power is changed in one of a plurality of speed positions.

Conventionally, as a control system for a hybrid vehicle of this kind, one disclosed in PTL 1 is known. This hybrid vehicle includes an internal combustion engine as a motive power source, and motive power of the engine is transmitted to drive wheels, while having the speed thereof changed by a transmission mechanism in one of a plurality of speed positions thereof.

Further, in the control system, during traveling of the vehicle, it is predicted whether or not the speed position will be changed from the present speed position before the change to another speed position, and further return to the speed position before the change. When it is predicted that the speed position will return to the speed position before the change, a speed change duration which is a time period required for the speed position to return to the speed position before the change after being changed to the other speed position. Further, as an amount of fuel consumed by the engine before the calculated speed change duration elapses, a first fuel consumption amount assuming that the speed position is held without being changed to the other speed position, and a second fuel consumption amount assuming that the speed position will return to the speed position before the change are calculated. Then, to obtain excellent fuel economy of the engine, it is determined whether or not to change the speed position, based on a result of comparison between the calculated first fuel consumption amount and second fuel consumption amount.

As another conventional control system for the hybrid vehicle, one disclosed in PTL 2 is known. Travel mode of this hybrid vehicle include an ENG travel mode using an internal combustion engine alone as a motive power source, an EV mode using an electric motor alone as a motive power source, and an HEV travel mode using both the engine and the electric motor as motive power sources. Further, the hybrid vehicle is equipped with a first transmission mechanism having a first speed position, a third speed position, and a fifth speed position, and a second transmission mechanism having a second speed position, a fourth speed position, and a sixth speed position. The motive power of the engine (hereinafter referred to as the "engine motive power") is transmitted to the drive wheels while having the speed thereof changed in one of the first to sixth speed positions of the first or second transmission mechanism, and the motive power of the electric motor (hereinafter referred to as the "motor motive power") is transmitted to the drive wheels while having the speed thereof changed in one of the second speed position, the fourth speed position, and the sixth speed position of the second transmission mechanism.

Further, when a vehicle speed is not higher than a predetermined value, the ENG travel mode which uses regeneration by the electric motor and a battery in combination is selected, and the second speed position or the first speed position is selected as a speed position for the engine motive power, while the second speed position is selected as a speed position for the motor motive power. Further, a minimum fuel economy torque at which a fuel consumption ratio is minimized is set as a target torque of the engine, based on the selected speed position for the engine motive power and the rotational speed of the engine determined by the rotational speed of the drive wheels. Then, the engine is operated such that the calculated target torque can be obtained, and electric power is generated by the electric motor using a surplus amount of the target torque with respect to a required torque, whereby the generated electric power is charged into the battery.

[PTL 1] International Publication Pamphlet No. WO2010/131367

[PTL 2] Japanese Laid-Open Patent Publication No. 2009-173196

In a hybrid vehicle including the engine and the electric motor capable of generating electric power, as motive power sources, when load on the engine is low, thereby increasing the fuel consumption ratio of the engine, the electric motor alone is used in order to improve fuel economy of the vehicle. Further, during traveling of the hybrid vehicle, the motive power of the engine is controlled such that the minimum fuel consumption ratio can be obtained, and when the motive power of the engine controlled as above is larger than a required driving force required for the drive wheels, electric power is generated using a surplus amount of the motive power of the engine with respect to the required driving force, whereby the generated electric power is charged into the battery (regeneration). Furthermore, regeneration is performed by the electric motor using the motive power of the drive wheels during deceleration of the hybrid vehicle. Increasing the charge amount of the battery during traveling or deceleration of the vehicle results in an increase in the traveling time period during which the vehicle travels using the electric motor alone as a motive power source, which in turn leads to enhancement of the fuel economy of the hybrid vehicle.

In this regard, in the conventional control system disclosed in PTL 1, it is determined whether or not to change the speed position during traveling of the vehicle using the engine as a motive power source, only based on the first and second fuel consumption amounts, and hence it is impossible to increase the charge amount of the battery, which in turn makes it impossible to obtain excellent fuel economy.

Further, the electric power charged into the battery is converted to motive power of the electric motor in the EV travel mode and the HEV travel mode, and is used as a driving force of the hybrid vehicle. Therefore, to improve the fuel economy of the hybrid vehicle, it is desirable that the state of charge of the battery is maintained, and the EV travel mode or the like can be selected, as required. Further, the charging efficiency of the battery is different on a speed position basis. In this regard, in the conventional control system described in PTL 2, when charging the battery in the ENG travel mode, the speed position for the engine motive power is set only to the first speed position or the second speed position, and the speed position for the motor motive power is set only to the second speed position. For this reason, as described above, even when the battery is charged by the motor while the engine is operated with the minimum fuel economy torque, there is a fear that the state of charge of the battery cannot be efficiently restored since the charging efficiency is low, which makes it impossible to obtain excellent fuel economy of the hybrid vehicle.

Further, in the control system disclosed in PTL 2, when the vehicle speed is not higher than the predetermined value, the target torque of the engine is set to the minimum fuel economy torque, and the surplus amount of the target torque with respect to the required torque is given to regeneration by the electric motor. This surplus torque is regenerated as electric energy after being used for power generation by the electric motor and charging of the battery. Then, in the EV travel mode or the HEV travel mode, the surplus torque is used as the driving force of the hybrid vehicle after being discharged from the battery and converted to mechanical energy. Therefore, efficiencies of these processes have influence on the fuel consumption ratio of the whole hybrid vehicle, and in turn on the fuel economy thereof.

For example, when the difference between the required torque and the minimum fuel economy torque of the engine is small, load on the electric motor corresponding to a surplus amount of the difference becomes small, so that conversion efficiency exhibited when traveling energy is converted to electric energy by the electric motor is largely reduced. Therefore, as in the conventional control system, even if the target torque of the engine is merely set to the minimum fuel economy torque to give the surplus amount of the target torque with respect to the required torque to the regeneration by the electric motor, there is a fear that the fuel consumption ratio of the whole hybrid vehicle is not necessarily minimized, and the most excellent fuel economy cannot be obtained, although the fuel consumption ratio of the engine is minimized.

The present invention has been made to provide a solution to the above-described first problem, and a first object thereof is to provide a control system and a control method for a hybrid vehicle, which are capable of properly determining whether or not to change a speed position based on a predicted charge amount, thereby making it possible to obtain a larger charge amount, and in turn making it possible to improve fuel economy of the vehicle.

Further, the present invention has been made to provide a solution to the above-described second problem, and a second object thereof is to provide a control system and a control method for a hybrid vehicle, which are capable of efficiently restoring a state of charge of a storage battery when the state of charge of the storage battery is reduced, thereby making it possible to improve the fuel economy of the hybrid vehicle.

Furthermore, the present invention has been made to provide a solution to the above-described third problem, and a third object thereof is to provide a control system and a control method for a hybrid vehicle, which are capable of improving the fuel economy of the hybrid vehicle by properly selecting a travel mode even when a required torque of the hybrid vehicle is close to a driving force of an internal combustion engine corresponding to a minimum fuel consumption ratio of the hybrid vehicle.

To attain the above first object, the invention according to claim 1 is a control system for a hybrid vehicle including an electric motor 4 capable of generating electric power as a motive power source, a storage battery (battery 52) capable of supplying and receiving electric power to and from the electric motor 4, and a transmission mechanism 71 capable of transmitting input motive power to drive wheels DW, DW in a state in which a speed of the motive power is changed in one of a plurality of speed positions, the control system comprising first charge amount-estimating means for estimating a first charge amount, which is an amount of electric power charged into the storage battery when regeneration is performed by the electric motor 4 for a predetermined regeneration time period in a state in which the speed position is held, second charge amount-estimating means for estimating a second charge amount, which is an amount of electric power charged into the storage battery when the speed position is changed to a target speed position within the regeneration time period and the regeneration by the electric motor 4 is performed until the regeneration time period elapses, speed change-determining means for determining, based on the estimated first and second charge amounts, whether to hold the speed position or to change the speed position to the target speed position, and speed position-setting means for setting the speed position based on a result of the determination by the speed change-determining means.

With this configuration, the motive power of the electric motor is transmitted to the drive wheels by the transmission mechanism in the state in which the speed of the motive power is changed in one of the speed positions. That is, transmission of the motive power between the electric motor and the drive wheels is performed via the transmission mechanism. In a transmission mechanism of a type that changes the speed position, transmission of motive power is interrupted during a time period from the start of a change of the speed position to the completion of the same (hereinafter referred to as the "speed position change time period"). Hereinafter, such an interruption of transmission of motive power is referred to as the "speed changing transmission interruption". For this reason, during traveling of the hybrid vehicle, when regeneration is performed using motive power transmitted to the electric motor, the regeneration by the electric motor cannot be performed due to the above-mentioned speed changing transmission interruption during the above-mentioned speed position change time period, so that it is impossible to charge electric power into the storage battery. Therefore, during traveling of the hybrid vehicle, even if it is desired to change the speed position of the transmission mechanism within a predetermined regeneration time period and perform regeneration until the regeneration time period lapses, it is impossible to effectively perform regeneration in a destination speed position unless after the change of the speed position is completed.

In this regard, with the above-described configuration, the second charge amount-estimating means estimates the second charge amount, which is a predicted value of the amount of electric power charged into the storage battery when the speed position is changed to the target speed position within the regeneration time period and the regeneration is performed until the regeneration time period elapses.

Further, the first charge amount-estimating means estimates the first charge amount, which is a predicted value of the amount of electric power charged into the storage battery when regeneration is performed by the electric motor during the regeneration time period in the state of the speed position being held. Furthermore, the speed change-determining means determines, based on the estimated first and second charge amounts, whether to hold the speed position or to change the speed position to the target speed position. This makes it possible to properly determine whether or not to change the speed position, based on the first charge amount, which is the predicted value in the case of the speed position being held, and the second charge amount, which is the predicted value in the case of the speed position being changed, on condition that a larger charge amount can be obtained. Further, since the speed position-setting means sets the speed position based on the result of the determination, it is possible to obtain a larger charge amount, which in turn makes it possible to improve fuel economy of the hybrid vehicle.

To attain the above first object, the invention according to claim 2 is a control system for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising first charge amount-estimating means (ECU 2, step 1) for estimating a first charge amount CH1, which is an amount of electric power charged into the storage battery when regeneration is performed by the electric motor 4 for a predetermined regeneration time period in a state in which the speed position is held, second charge amount-estimating means (ECU 2, step 3) for estimating a second charge amount CH2, which is an amount of electric power charged into the storage battery when the speed position is changed to a target speed position within the regeneration time period and the regeneration by the electric motor 4 is performed until the regeneration time period elapses, speed change-determining means (ECU 2, step 4) for determining, based on the estimated first and second charge amounts, whether to hold the speed position or to change the speed position to the target speed position, and speed position-setting means (ECU 2, steps 5 and 6) for setting the speed position based on a result of the determination by the speed change-determining means.

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism.

Furthermore, the motive power of the electric motor is transmitted to the drive wheels in a state in which the speed thereof is changed in one of the speed positions of the first transmission mechanism. That is, transmission of the motive power between the electric motor and the drive wheels is performed via the transmission mechanism. As described in the description of the invention according to claim 1, in the transmission mechanism of the type that changes the speed position, during the speed position change time period (time period from the start of a change of the speed position to the completion of the same), there occurs speed changing transmission interruption so that transmission of motive power is interrupted. For this reason, when regeneration is performed during traveling of the vehicle using motive power transmitted to the electric motor, the speed changing transmission interruption makes it impossible to perform regeneration by the electric motor during the speed position change time period over which a speed position-changing operation is performed by the first transmission mechanism. Therefore, during traveling of the hybrid vehicle, even if it is desired to change the speed position within the regeneration time period and perform regeneration until the regeneration time period elapses, it is impossible to effectively perform regeneration in a destination speed position unless after the change of the speed position is completed.

In this regard, with the above-described configuration, the second charge amount-estimating means estimates the second charge amount, which is a predicted value of the amount of electric power charged into the storage battery when the speed position is changed to the target speed position within the regeneration time period and the regeneration is performed until the regeneration time period elapses.

Further, the first charge amount-estimating means estimates the first charge amount, which is a predicted value of the amount of electric power charged into the storage battery when regeneration is performed by the electric motor during the regeneration time period in the state of the speed position being held. Furthermore, the speed change-determining means determines, based on the estimated first and second charge amounts, whether to hold the speed position or to change the speed position to the target speed position. This makes it possible to properly determine whether or not to change the speed position, based on the first charge amount, which is the predicted value in the case of the speed position being held, and the second charge amount, which is the predicted value in the case of the speed position being changed, on condition that a larger charge amount can be obtained. Further, since the speed position-setting means sets the speed position based on the result of the determination, it is possible to obtain a larger charge amount, which in turn makes it possible to improve the fuel economy of the hybrid vehicle.

The invention according to claim 3 is the control system 1 as recited in claim 1 or 2, wherein the first charge amount CH1 is an amount of electric power charged into the storage battery when the regeneration by the electric motor 4 is performed in the state in which the speed position is held, during deceleration of the hybrid vehicle, until the hybrid vehicle stops, and wherein the second charge amount CH2 is an amount of electric power charged into the storage battery during deceleration of the hybrid vehicle when the speed position is changed to the target speed position before the hybrid vehicle stops, and the regeneration by the electric motor 4 is performed until the hybrid vehicle stops.

With this configuration, the second charge amount is an amount of electric power charged into the storage battery during deceleration of the hybrid vehicle when the speed position is changed to the target speed position before the hybrid vehicle stops, and the regeneration by the electric motor is performed until the hybrid vehicle stops.

Further, as the first charge amount, an amount of electric power is estimated which is charged into the storage battery when the regeneration by the electric motor is performed in the state in which the speed position is held, during deceleration of the hybrid vehicle, until the hybrid vehicle stops. Then, it is determined based on the estimated first and second charge amounts whether to hold the speed position or to change the speed position to the target speed position. Therefore, also during deceleration of the vehicle, it is possible to properly determine whether or not to change the speed position, based on the first charge amount, which is the predicted value in the case of the speed position being held, and the second charge amount, which is the predicted value in the case of the speed position being changed, on condition that a larger charge amount can be obtained. Further, since the speed position is set based on the result of the determination, it is possible to obtain a larger charge amount, which in turn makes it possible to improve the fuel economy of the hybrid vehicle.

The invention according to claim 4 is the control system 1 as recited in claim 3, further comprising brake control means (ECU 2) for controlling an operation of a brake B of the hybrid vehicle in order to decelerate the hybrid vehicle, during deceleration of the hybrid vehicle and when the speed position-setting means is changing the speed position to the target speed position.

As is widely known, in the electric motor, a braking force is generated by regeneration. This braking force is transmitted to the drive wheels via the transmission mechanism or the first transmission mechanism (the former as to claim 1 and the latter as to claim 2). On the other hand, as described in the description of the invention according to claim 1, during the speed position change time period, due to interruption of transmission of motive power (speed changing transmission interruption), it is impossible to perform regeneration, and no braking force is generated by regeneration. Therefore, it is impossible to decelerate the vehicle using the braking force.

With the above-described configuration, during deceleration of the hybrid vehicle and at the same time during changing of the speed position to the target speed position, the operation of the brake of the vehicle is controlled by the brake control means in order to decelerate the vehicle, and hence it is possible to properly decelerate the vehicle such that no shock is caused.

To attain the above first object, the invention according to claim 5 is a control system 1 for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system 1 comprising first charge amount-estimating means (ECU 2, step 1) for estimating a first charge amount CH1, which is an amount of electric power charged into the storage battery assuming that regeneration is performed by the electric motor 4 during deceleration of the hybrid vehicle until the hybrid vehicle stops, in a state in which the speed position is held, speed change duration- estimating means (ECU 2, step 2) for estimating a speed change duration TIM, which is a time period required for a change of the speed position of the first transmission mechanism to a target speed position to be completed from when the change is started, second charge amount- estimating means (ECU 2, step 3) for estimating an amount of electric power which is charged into the storage battery when regeneration by the electric motor 4 is performed in a state in which the speed position has been changed to the target speed position, for a time period from when the estimated speed change duration TIM has elapsed to when the hybrid vehicle stops, as a second charge amount CH2, which is an amount of electric power charged into the storage battery assuming that the speed position is changed to the target speed position before the hybrid vehicle stops during deceleration of the hybrid vehicle and the regeneration by the electric motor 4 is performed until the hybrid vehicle stops, speed change-determining means (ECU 2, step 4) for determining, based on the estimated first and second charge amounts CH1 and CH2, whether to hold the speed position or to change the speed position to the target speed position, and speed position-setting means (ECU 2, steps 5 and 6) for setting the speed position based on a result of the determination by the speed change-determining means.

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism.

Furthermore, the motive power of the electric motor is transmitted to the drive wheels in a state in which the speed thereof is changed in one of the speed positions of the first transmission mechanism. That is, transmission of the motive power between the electric motor and the drive wheels is performed via the transmission mechanism. As described in the description of the invention according to claim 1, in the transmission mechanism of the type that changes the speed position, during the speed position change time period (time period from the start of a change of the speed position to the completion of the same), there occurs speed changing transmission interruption so that transmission of motive power is interrupted. For this reason, when regeneration is performed using motive power transmitted from the drive wheels to the electric motor, the speed changing transmission interruption makes it impossible to perform regeneration by the electric motor, during the speed position change time period over which a speed position-changing operation is performed by the first transmission mechanism. Therefore, during deceleration of the hybrid vehicle, even if it is desired to change the speed position of the first transmission mechanism before the hybrid vehicle stops and perform regeneration until the regeneration time period elapses, it is impossible to effectively perform regeneration in a destination speed position unless after the change of the speed position is completed.

In this regard, with the above-described configuration, the speed change duration, which is a time period required for a change of the speed position of the first transmission mechanism to a target speed position to be completed from when the change is started, is estimated by the speed change duration-estimating means. Further, the amount of electric power which is charged into the storage battery when regeneration by the electric motor is performed in the state in which the speed position is changed to the target speed position, for a time period from when the estimated speed change duration has elapsed to when the hybrid vehicle stops, is estimated as the second charge amount, which is an estimated value of the amount of electric power charged into the storage battery assuming that the speed position is changed to the target speed position before the hybrid vehicle stops during deceleration of the hybrid vehicle and regeneration is performed until the hybrid vehicle stops. Therefore, it is possible to accurately estimate the second charge amount, which is a charge amount in the case of the speed position being changed.

Further, the first charge amount, which is the amount of electric power charged into the storage battery assuming that regeneration is performed by the electric motor during deceleration of the vehicle until the vehicle stops, in a state in which the speed position is held, is estimated by the first charge amount-estimating means. Furthermore, it is determined by the speed change- determining means for determining, based on the estimated first and second charge amounts, whether to hold the speed position or to change the speed position to the target speed position. This makes it possible, during deceleration of the vehicle, to properly determine whether or not to change the speed position, based on the first charge amount, which is the predicted value in the case of the speed position being held and the second charge amount, which is the predicted value in the case of the speed position being changed, such that a larger charge amount can be obtained. Further, since the speed position is set by the speed position-setting means based on the result of the determination, it is possible to obtain a larger charge amount, which in turn makes it possible to improve the fuel economy of the vehicle.

The invention according to claim 6 is the control system 1 as recited in claim 3 or 5, further comprising storage battery state-determining means (ECU 2) for determining whether one of a first condition that a state of charge SOC of the storage battery is not smaller than an upper limit value and a second condition that a temperature (battery temperature TB) of the storage battery is not lower than a predetermined temperature is satisfied, regeneration inhibiting means (ECU 2) for inhibiting the regeneration by the electric motor 4 when it is determined that one of the first and second condition is satisfied, and brake control means (ECU 2) for controlling an operation of a brake B of the hybrid vehicle during deceleration of the hybrid vehicle, in order to decelerate the hybrid vehicle when the regeneration by the electric motor 4 is inhibited by the regeneration inhibiting means.

If the storage battery is charged when the state of charge of the storage battery is relatively large or when the temperature of the storage battery is relatively high, there is a fear that the battery is overheated. With the above-described configuration, it is determined by the battery state-determining means whether one of the first condition that the state of charge of the storage battery is not smaller than the upper limit value and the second condition that the temperature of the storage battery is not lower than the predetermined temperature is satisfied. Further, the regeneration by the electric motor is inhibited by the regeneration inhibiting means when it is determined that one of the first and second conditions is satisfied. Therefore, it is possible to prevent the above-mentioned overheat of the storage battery.

Further, during deceleration of the vehicle, when the regeneration by the electric motor is inhibited by the regeneration inhibiting means, the operation of the brake of the vehicle is controlled by the brake control means in order to decelerate the vehicle, and hence it is possible to properly decelerate the vehicle such that no shock is caused.

The invention according to claim 7 is the control system 1 as recited in any one of claims 3 to 5, wherein during deceleration of the hybrid vehicle, when it is determined that the speed position should be changed to the target speed position, the speed position-setting means starts the change of the speed position to the target speed position at a timing at which an operation amount (brake pedal stepping force BP) of a brake pedal B of the hybrid vehicle is reduced by not less than a predetermined value.

As is widely known, in the electric motor, a braking force is generated by regeneration. This braking force is transmitted to the drive wheels via the transmission mechanism or the first transmission mechanism (the former as to claim 1 and the latter as to claim 2). On the other hand, as described in the description of the invention according to claim 1, during the speed position change time period, due to interruption of transmission of motive power (speed changing transmission interruption), it is impossible to perform regeneration, and no braking force is generated by regeneration.

With this configuration, during deceleration of the vehicle, the change of the speed position to the target speed position is started at the timing at which the operation amount of the brake pedal of the vehicle is reduced by not smaller than the predetermined value, that is, at a timing at which a driver' s deceleration demand is reduced, so that it is possible to change the speed position without giving a large sense of discomfort to the driver.

To attain the above first object, the invention according to claim 8 is a control system 1 for a hybrid vehicle including an internal combustion engine 2, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the control system comprising lost regenerative electric energy-predicting means (ECU 2, step 11) for predicting, according to a brake pedal stepping force (brake pedal stepping force BP) of a brake pedal B of the hybrid vehicle and a speed VP of the hybrid vehicle, lost regenerative electric energy LRE which is electric energy incapable of being regenerated due to interruption of transmission of motive power in the first transmission mechanism 11, caused by a change in the speed position of the first transmission mechanism 11, assuming that during deceleration of the hybrid vehicle, the speed position of the first transmission mechanism 11 is changed and regeneration by the electric motor 4 is performed, and speed position change-inhibiting means (ECU 2, steps 12 and 13) for inhibiting a change in the speed position when the predicted lost regenerative electric energy LRE is larger than a predetermined value LREREF, in a case where the regeneration by the electric motor 4 is performed during deceleration of the hybrid vehicle.

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism.

Furthermore, the motive power of the electric motor is transmitted to the drive wheels in a state in which the speed thereof is changed in one of the speed positions of the first transmission mechanism. That is, transmission of the motive power between the electric motor and the drive wheels is performed via the transmission mechanism. As described in the description of the invention according to claim 1, in the transmission mechanism of the type that changes the speed position, during the speed position change time period (time period from the start of a change of the speed position to the completion of the same), there occurs speed changing transmission interruption so that transmission of motive power is interrupted. For this reason, when regeneration is performed using motive power transmitted from the drive wheels to the electric motor, the speed changing transmission interruption makes it impossible to perform regeneration by the electric motor, during the speed position change time period over which the speed position-changing operation is performed by the first transmission mechanism.

In this regard, with the above-described configuration, assuming that during deceleration of the vehicle, the speed position of the first transmission mechanism is changed and regeneration by the electric motor is performed, the lost regenerative electric energy, which is the electric energy incapable of being regenerated due to the interruption of transmission of motive power in the first transmission mechanism, caused by a change of the speed position of the first transmission mechanism, is predicted by the lost regenerative electric energy-predicting means. Further, during deceleration of the vehicle, in the case where regeneration by the electric motor is performed, when the predicted lost regenerative electric energy is larger than the predetermined value, the change of the speed position is inhibited by the speed position change-inhibiting means. This makes it possible, when the lost regenerative electric energy, which is electric energy incapable of being regenerated due to speed changing transmission interruption, is relatively large, to inhibit the speed position from being changed to the target speed position, and perform regeneration in the state of the speed position being held, and hence it is possible to obtain a larger charge amount, which in turn makes it possible to improve the fuel economy of the vehicle.

As is widely known, in the electric motor, a braking force is generated by regeneration according to generated electric power. In general, this braking force is used to decelerate the vehicle during deceleration of the vehicle, and is controlled by controlling electric power generated by the electric motor according to the brake pedal stepping force. In this case, the brake pedal stepping force has a correlation with electric power generated by the electric motor and charged into the storage battery. Further, since the speed of the vehicle has a correlation with motive power transmitted from the drive wheels to the electric motor, and similarly, has a correlation with the electric power charged into the storage battery. In this regard, with the above-described configuration, since the brake pedal stepping force and the speed of the vehicle are used as parameters for predicting the lost regenerative electric energy, it is possible to properly perform the prediction.

To attain the above first object, the invention according to claim 9 is a method of controlling a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising estimating a first charge amount CH1, which is an amount of electric power charged into the storage battery assuming that regeneration is performed by the electric motor 4 during deceleration of the hybrid vehicle until the hybrid vehicle stops, in a state in which the speed position is held (step 1), estimating a speed change duration TIM, which is a time period required for a change of the speed position of the first transmission mechanism 11 to a target speed position to be completed from when the change is started (step 2), estimating an amount of electric power which is charged into the storage battery when regeneration by the electric motor 4 is performed in a state in which the speed position has been changed to the target speed position, for a time period from when the estimated speed change duration TIM has elapsed to when the hybrid vehicle stops, as a second charge amount CH2, which is an amount of electric power charged into the storage battery assuming that the speed position is changed to the target speed position before the hybrid vehicle stops during deceleration of the hybrid vehicle and the regeneration by the electric motor 4 is performed until the hybrid vehicle stops (step 3), determining, based on the estimated first and second charge amounts CH1 and CH2, whether to hold the speed position or to change the speed position to the target speed position (step 4), and setting the speed position based on a result of the determination (steps 5 and 6).

With this configuration, it is possible to obtain the same advantageous effects as provided by the invention according to claim 5.

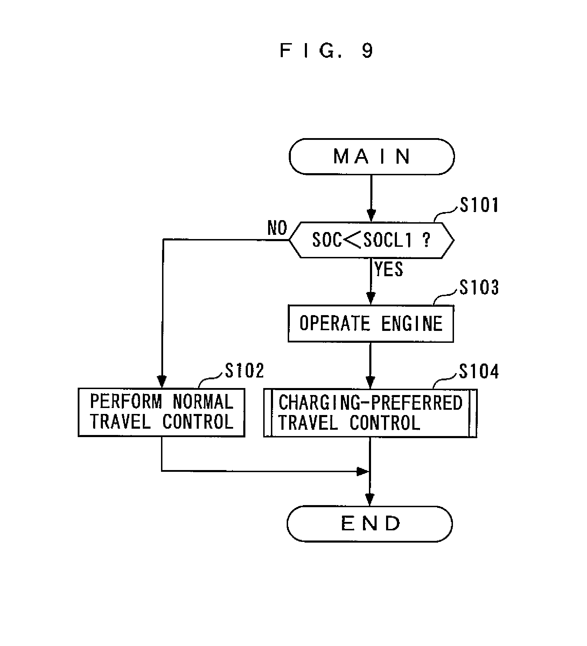

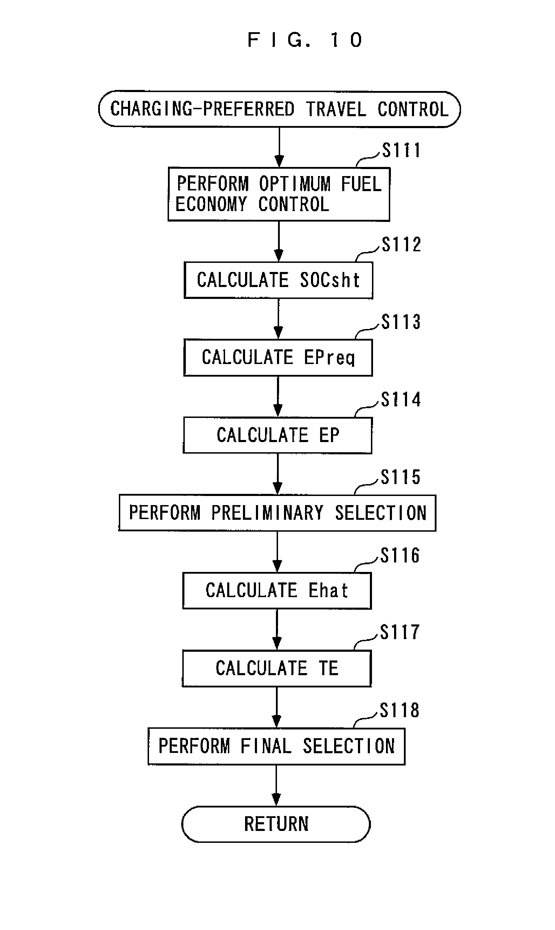

To attain the above second object, the invention according to claim 10 is a control system 1 for a hybrid vehicle including an internal combustion engine 3 and an electric motor 4 capable of generating electric power, as motive power sources, a storage battery (battery 52) capable of supplying and receiving electric power to and from the electric motor 4, and a transmission mechanism 71 capable of transmitting input motive power to drive wheels DW, DW in a state in which a speed of the motive power is changed in one of a plurality of speed positions, the control system comprising charging-preferred travel-executing means (ECU 2, step 104 in FIG. 9) for executing, when a state of charge SOC of the storage battery becomes lower than a predetermined first lower limit value SOCL1, charging-preferred travel in which the engine 3 is operated in a vicinity of an optimum fuel economy line and regeneration by the electric motor 4 using part of the motive power of the engine 3 is performed in order to restore the state of charge of the storage battery, total efficiency-calculating means (ECU 2, step 117 in FIG. 10) for calculating a total efficiency TE of the hybrid vehicle V for each speed position, and speed position-selecting means (ECU 2, step 118 in FIG. 10) for selecting a speed position which is largest in the calculated total efficiency TE, from the plurality of speed positions, when executing the charging-preferred travel.

According to this control system for the hybrid vehicle, the motive power of the engine or the motive power of the electric motor is transmitted to the drive wheels in the state in which the speed of the motive power is changed by one of the plurality of speed positions. Further, when the state of charge of the storage battery becomes lower than the predetermined first lower limit value, the charging-preferred travel is executed in which the engine is operated in the vicinity of the optimum fuel economy line at which the fuel consumption of the engine is minimized, and regeneration by the electric motor is performed using part of the motive power of the engine, to restore the state of charge of the storage battery.

As described above, since the engine is operated in the vicinity of the optimum fuel economy line, it is possible to improve the fuel economy of the engine. Further, by executing the charging-preferred travel, the difference between an output required of the engine and a generated output is used for regeneration by the electric motor, and electric power generated by regeneration is charged into the storage battery. Therefore, the state of charge which has become lower than the first lower limit value can be positively restored.

Here, the electric power generated by regeneration by the electric motor and charged into the storage battery is converted to motive power of the electric motor in the future and is used to drive the hybrid vehicle. For this reason, to improve the fuel economy of the hybrid vehicle, it is necessary to enhance the total efficiency of the whole hybrid vehicle, including not only the efficiency of the engine at the time point but also the power generation efficiency of the electric motor and the charging efficiency of the storage battery. Further, the power generation efficiency of the electric motor and the charging efficiency of the storage battery are different from a speed position to a speed position.

In the present invention, when the charging-preferred travel is executed, the total efficiency of the whole hybrid vehicle is calculated for each speed position, and a speed position which is largest in the calculated total efficiency is selected from the plurality of speed positions. This makes it possible to maximize the total efficiency of the whole hybrid vehicle, thereby making it possible to improve the fuel economy of the hybrid vehicle.

To attain the above second object, the invention according to claim 11 is a control system 1 for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 13, and a second clutch C2 that is capable of engaging between the engine output shaft and the second transmission mechanism 31, the control system comprising charging-preferred travel-executing means (ECU 2, step 104 in FIG. 9) for executing, when a state of charge SOC of the storage battery becomes lower than a predetermined first lower limit value SOCL1, charging-preferred travel in which the engine 3 is operated in a vicinity of an optimum fuel economy line and regeneration by the electric motor 4 using part of the motive power of the engine 3 is performed in order to restore the state of charge SOC of the storage battery, total efficiency-calculating means (ECU 2, step 117 in FIG. 10) for calculating a total efficiency TE of the hybrid vehicle V for each speed position, and speed position-selecting means (ECU 2, step 118 in FIG. 10) for selecting a speed position which is largest in the calculated total efficiency E, from the plurality of speed positions, when executing the charging-preferred travel.

According to this control system for the hybrid vehicle, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism. Furthermore, the motive power of the electric motor is transmitted to the drive wheels in a state in which the speed thereof is changed in one of the speed positions of the second transmission mechanism.

Further, similarly to the invention according to the above-described claim 10, when the state of charge of the storage battery becomes lower than the predetermined lower limit value, to restore the state of charge of the storage battery, the charging-preferred travel is executed in which the engine is operated in the vicinity of the optimum fuel economy line at which the fuel consumption of the engine is minimized, and regeneration by the electric motor is performed using part of the motive power of the engine. Therefore, it is possible to improve the fuel economy of the hybrid vehicle, and positively restore the state of charge which has become lower than the lower limit value.

Further, when the charging-preferred travel is executed, the total efficiency of the whole hybrid vehicle is calculated for each speed position, and a speed position which is largest in the calculated total efficiency is selected from the plurality of speed positions . This makes it possible to maximize the total efficiency of the whole hybrid vehicle, thereby making it possible to improve the fuel economy of the hybrid vehicle.

The invention according to claim 12 is the control system 1 as recited in claim 10 or 11, further comprising required electric power-calculating means (ECU 2, step 113 in FIG. 10) for calculating required electric power EPreq required for restoring a state of charge SOC of the storage battery up to a predetermined target state of charge SOCM within a predetermined time period Tref when the state of charge SOC of the storage battery becomes lower than the first lower limit value SOCL1, and preliminary selection means (ECU 2, step 115 in FIG. 10) for preliminarily selecting a plurality of speed positions which are capable of generating the calculated required electric power EPreq by regeneration by the electric motor 4, from the plurality of speed positions, and wherein the speed position-selecting means finally selects the speed position which is largest in the total efficiency TE from the selected plurality of speed positions.

With this configuration, when the state of charge of the storage battery becomes lower than the first lower limit value, the required electric power, which is required for restoring the state of charge of the storage battery up to the predetermined target state of charge within the predetermined time period, is calculated, and a plurality of speed positions, which are capable of generating the required electric power calculated when the regeneration by the electric motor is performed, is preliminarily selected from the speed positions. Then, a speed position which is largest in the total efficiency of the hybrid vehicle is finally selected. By selecting the speed position as described above, it is possible to restore the state of charge of the storage battery up to the target state of charge within the predetermined time period and obtain the largest total efficiency of all satisfying the conditions.

The invention according to claim 13 is the control system 1 as recited in claim 11 wherein in a state in which the first clutch C1 is disengaged and also the second clutch C2 is engaged, the motive power of the second input shaft 32 is transmitted to the first input shaft 13 via the second transmission mechanism 31 and the first transmission mechanism 11, and wherein during the charging-preferred travel, in a state in which a speed of the motive power of the engine 3 is changed by the second transmission mechanism, when the state of charge SOC of the storage battery becomes lower than a predetermined second lower limit value SOCL2 lower than the first lower limit value SOCL1, the speed position-selecting means shifts the speed position of the second transmission mechanism 31 to a speed position higher by one stage, and selects a speed position which is largest in charging efficiency (charge amount EP) of the storage battery when regeneration by the electric motor 4 is performed, from the plurality of speed positions of the first transmission mechanism 11.

With this configuration, when the hybrid vehicle is traveling in the state in which the speed of the motive power of the engine has been changed by the second transmission mechanism, rotation of the engine is changed in speed by the first transmission mechanism and the second transmission mechanism, and then is transmitted to the first input shaft. For this reason, the rotational speed of the first input shaft becomes higher as the speed position of the second transmission mechanism is higher. Therefore, during the charging-preferred travel, when the state of charge of the storage battery has become lower than the predetermined second lower limit value lower than the first lower limit value SOCL1, the speed position of the second transmission mechanism is shifted to a position higher by one stage, whereby it is possible to increase the rotational speed of the first input shaft.

Further, in the case where the speed of the motive power of the engine is changed by the second transmission mechanism, differently from the case where the speed of the motive power of the engine is changed by the first transmission mechanism, it is possible to select a speed position of the first transmission mechanism on the electric motor side, as desired. According to the present invention, during the charging-preferred travel, when the state of charge of the storage battery has become lower than the second lower limit value, the speed position which is largest in the charging efficiency of the storage battery is selected as the speed position of the first transmission mechanism. This makes it possible to restore the state of charge of the battery which has become lower than the second lower limit value, early at a highest charging efficiency.

The invention according to claim 14 is the control system 1 as recited in claim 10 or 11, wherein when an amount of change in an accelerator pedal opening is larger than a predetermined value, motive power-preferred travel in which the motive power of the engine is given preference is executed in place of the charging-preferred travel.

With this configuration, when the amount of change in the accelerator pedal opening is larger than the predetermined value, i.e. when an acceleration demand by the driver is high, the motive power-preferred travel in which the motive power of the engine is given preference is executed in place of the charging-preferred travel. This makes it possible to transmit torque larger than torque corresponding to the acceleration demand by the driver, to the drive wheels, whereby it is possible to improve drivability.

The invention according to claim 15 is the control system 1 as recited in claim 10 or 11, wherein when the state of charge SOC of the storage battery is lower than the first lower limit value SOCL1, stoppage of the engine is inhibited.

With this configuration, when the state of charge of the storage battery is lower than the first lower limit value, i.e. when the charging-preferred travel is performed, the stoppage of the engine is inhibited. This makes it possible to positively perform regeneration by the electric motor, and restore the state of charge of the storage battery.

The invention according to claim 16 is the control system 1 as recited in claim 10 or 11, wherein during EV traveling in which the hybrid vehicle travels using motive power of the electric motor 4 in a stopped state of the engine 3, when the state of charge SOC of the storage battery becomes lower than the first lower limit value SOCL1, the engine 3 is started using the motive power of the electric motor 4.

With this configuration, during the EV traveling, when the state of charge of the storage battery becomes lower than the first lower limit value, the engine is started using the motive power of the electric motor. By thus forcibly starting the engine, it is possible to positively perform regeneration by the electric motor, whereby it is possible to restore the state of charge of the storage battery.

To attain the above second object, the invention according to claim 17 is a method of controlling a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, the method comprising executing, when the state of charge SOC of the storage battery becomes lower than a predetermined first lower limit value SOCL1, charging-preferred travel in which the engine 3 is operated in a vicinity of an optimum fuel economy line and regeneration by the electric motor 4 using part of the motive power of the engine 3 is performed, in order to restore a state of charge of the storage battery (step 104 in FIG. 9), calculating a total efficiency of the hybrid vehicle V for each speed position (step 117 in FIG. 10), calculating required electric power EPreq required for restoring a state of charge SOC of the storage battery up to a predetermined target state of charge SOCM within a predetermined time period Tref (step 113 in FIG. 10), preliminarily selecting a plurality of speed positions which are capable of generating the calculated required electric power by regeneration by the electric motor, from the plurality of speed positions (step 115 in FIG. 10), and finally selecting a speed position which is largest in the calculated total efficiency from the selected plurality of speed positions when executing the charging-preferred travel (step 118 in FIG. 10).

With this configuration, it is possible to obtain the same advantageous effects as provided by the invention according to claims 11 and 12. Therefore, it is possible to improve the fuel economy of the hybrid vehicle, and positively restore the state of charge which has become lower than the first lower limit value. Further, it is possible to restore the state of charge of the storage battery up to the target state of charge within the predetermined time period and obtain the largest total efficiency of all satisfying the conditions.

To attain the above third object, the invention according to claim 18 is a control system for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels DW in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, wherein travel modes of the hybrid vehicle include an engine travel mode in which the hybrid vehicle travels using only the motive power of the engine 3, an assist travel mode in which the hybrid vehicle travels while having the motive power of the engine 3 assisted with motive power of the electric motor 4, and a charge travel mode in which the hybrid vehicle travels while performing electric charging with the electric motor 4 and the storage battery using part of the motive power of the engine 3, the control system comprising travel region-setting means (total fuel consumption ratio maps) for setting an engine travel region, which is a region that makes it possible to obtain small fuel consumption (total fuel consumption ratio TSFC) in the engine travel mode out of the travel modes, an assist travel region, which is a region that makes it possible to obtain small fuel consumption in the assist travel mode out of the travel modes, and a charge travel region, which is a region that makes it possible to obtain small fuel consumption in the charge travel mode out of the travel modes, with respect to a speed (vehicle speed VP) of the hybrid vehicle V and a required driving force (required torque TRQ) required for the drive wheels, in association with each speed position for the motive power of the engine 3, and selection means (ECU 2) for selecting a travel mode associated with a travel region to which a combination of the speed of the hybrid vehicle V and the required driving force belongs, and selecting a speed position which is smallest in fuel consumption as a speed position for the motive power of the engine 3.

With this configuration, when the engine output shaft of the engine and the first input shaft of the first transmission mechanism are engaged with each other by the first clutch, and engagement between the engine output shaft and the second input shaft of the second transmission mechanism is released by the second clutch, the motive power of the engine is transmitted to the drive wheels in a state in which the speed thereof is changed in one of the speed positions of the first transmission mechanism. Further, when engagement between the engine output shaft and the first input shaft is released by the first clutch, and the engine output shaft and the second input shaft are engaged with each other by the second clutch, the motive power of the engine is transmitted to the drive wheels in a state in which the speed thereof is changed in one of the speed positions of the second transmission mechanism. Furthermore, the motive power of the electric motor is transmitted to the drive wheels in a state in which the speed thereof is changed in one of the speed positions of the first transmission mechanism.

Further, as the regions that make it possible to obtain a small fuel consumption in the respective travel modes of the hybrid vehicle, the engine travel region, the assist travel region, and the charge travel region are set by the travel region-setting means, with respect to the speed of the hybrid vehicle and the required driving force required for the drive wheels, in association with each speed position for the motive power of the engine. Out of the travel regions, a travel region to which a combination of the speed of the hybrid vehicle and the required driving force belongs is determined, and a travel mode associated with the travel region is selected. This makes it possible to properly select a travel mode that makes it possible to obtain a smaller fuel consumption. Further, a speed position at which the fuel consumption is minimum is selected as the speed position for the motive power of the engine, whereby it is possible to select a speed position suitable for obtaining the smallest fuel consumption together with the travel mode. Therefore, by driving the hybrid vehicle using the thus selected travel mode and speed position for the motive power of the engine, it is possible to obtain a smaller fuel consumption even when the required driving force is close to the driving force of the engine corresponding to the smallest fuel consumption ratio, thereby making it possible to improve the fuel economy of the hybrid vehicle.

Further, only by setting the above-described travel regions in advance, and referring to the travel regions according to the speed and the required driving force of the hybrid vehicle, it is possible to easily and properly determine a travel mode and a speed position for the motive power of the engine, which make it possible to obtain a smaller fuel consumption ratio, without requiring complicated computation, etc.

The invention according to claim 19 is the control system 1 as recited in claim 18, wherein the fuel consumption is calculated using engine driving parameters which are an amount of fuel supplied to the engine 3 for traveling of the hybrid vehicle V, efficiency of the engine 3, and efficiencies of the first and second transmission mechanisms 11, 31, when the hybrid vehicle is in the assist travel mode; the fuel consumption is calculated using not only the engine driving parameters but also an amount of fuel supplied to the engine 3 in the past in order to charge the storage battery with electric power for assist traveling, discharging efficiency of the storage battery, the driving efficiency of the electric motor 4, and the efficiencies of the first and second transmission mechanisms 11, 31; and when the hybrid vehicle is in the charge travel mode, the fuel consumption is calculated using not only the engine driving parameters but also an amount of fuel supplied to the engine 3 in order to charge the storage battery with electric power generated by the electric motor 4, the efficiency of the engine 3, the efficiencies of the first and second transmission mechanisms 11, 31, power generation efficiency of the electric motor 4, charging efficiency of the storage battery, and predicted efficiency, which is efficiency predicted to be exhibited when an amount of electric power charged in the storage battery is used for traveling of the hybrid vehicle V in the future.

With this configuration, when the fuel consumption of the hybrid vehicle is calculated, the above-described parameters are used on a travel mode basis. Therefore, it is possible to accurately calculate the fuel consumption while causing the present, past and future losses, and the like of the engine, the first and second transmission mechanisms, the electric motor, and the storage battery to be reflected thereon, and accordingly further enhance the fuel economy of hybrid vehicle.

To attain the above third object, the invention according to claim 20 is a control system for a hybrid vehicle including an internal combustion engine 3 and an electric motor 4 capable of generating electric power, as motive power sources, a storage battery (battery 52) capable of supplying and receiving electric power to and from the electric motor 4, and a transmission mechanism 71 capable of transmitting input motive power to drive wheels DW, DW in a state in which a speed of the motive power is changed in one of a plurality of speed positions, wherein travel modes of the hybrid vehicle V' include an engine travel mode in which the hybrid vehicle travels using only the motive power of the engine 3, an assist travel mode in which the hybrid vehicle travels while having the motive power of the engine 3 assisted with motive power of the electric motor 4, and a charge travel mode in which the hybrid vehicle travels while performing electric charging with the electric motor 4 and the storage battery using part of the motive power of the engine 3, the control system comprising travel region-setting means (total fuel consumption ratio maps) for setting, with respect to a speed (vehicle speed VP) of the hybrid vehicle V' and a required driving force (required torque TRQ) required for the drive wheels DW, for each speed position, an engine travel region, which includes an optimum fuel economy line at which fuel consumption of the engine 3 is minimized and makes it possible to obtain small fuel consumption (total fuel consumption ratio TSFC) in the engine travel mode out of the travel modes, an assist travel region arranged on a side of the engine travel region where the required driving force is larger than in the engine travel region, and a charge travel region arranged on a side of the engine travel region where the required driving force is smaller than in the engine travel region, and selection means (ECU 2) for selecting the engine travel mode as the travel mode, when a combination of the speed of the hybrid vehicle and the required driving force belongs to the engine travel region.

With this configuration, the motive power of the engine and the motive power of the electric motor are each transmitted to the drive wheels in a state in which the speed thereof is changed in one of the speed positions of the second transmission mechanism. Further, with respect to the speed of the hybrid vehicle and the required driving force required for the drive wheels, for each speed position, the travel region-setting means sets the engine travel region, which includes the optimum fuel economy line at which the fuel consumption of the engine is minimized, the assist travel region arranged on a side of the engine travel region where the required driving force is larger than in the engine travel region, and the charge travel region arranged on a side of the engine travel region where the required driving force is smaller than in the engine travel region, as regions each of which makes it possible to obtain smaller fuel consumption among the travel modes.

Further, when the combination of the speed of the hybrid vehicle and the required driving force belongs to the engine travel region, the engine travel mode is selected as the travel mode of the hybrid vehicle. Therefore, in this case, even when the required driving force is not equal to the driving force of the engine corresponding to the smallest fuel consumption ratio but is close thereto, by selecting the engine travel mode, it is possible to obtain a smaller fuel consumption, thereby making it possible to improve the fuel economy of the hybrid vehicle.

Further, only by referring to the set the travel regions according to the speed and the required driving force of the hybrid vehicle, it is possible to easily and properly determine a travel mode, and smoothly switch between the engine travel mode and the assist travel mode or the charge travel mode, without requiring complicated computation, etc.

To attain the above third object, the invention according to claim 21 is a control system for a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, wherein travel modes of the hybrid vehicle V include an engine travel mode in which the hybrid vehicle travels using only the motive power of the engine 3, an assist travel mode in which the hybrid vehicle travels while having the motive power of the engine 3 assisted with motive power of the electric motor 4, and a charge travel mode in which the hybrid vehicle travels while performing electric charging with the electric motor 4 and the storage battery using part of the motive power of the engine 3, the control system comprising travel region-setting means (total fuel consumption ratio maps) for setting, with respect to a speed (vehicle speed VP) of the hybrid vehicle V and a required driving force (required torque TRQ) required for the drive wheels DW, for each speed position for the motive power of the engine 3, an engine travel region, which includes an optimum fuel economy line at which fuel consumption of the engine 3 is minimized and makes it possible to obtain small fuel consumption (total fuel consumption ratio TSFC) in the engine travel mode out of the travel modes, an assist travel region arranged on a side of the engine travel region where the required driving force is larger than in the engine travel region, and a charge travel region arranged on a side of the engine travel region where the required driving force is smaller than in the engine travel region, and selection means (ECU 2, FIG. 9) for selecting the engine travel mode as the travel mode, when a combination of the speed of the hybrid vehicle V and the required driving force belongs to the engine travel region.

The arrangement of the hybrid vehicle according to the present invention is the same as that of the hybrid vehicle according to claim 18. Further, according to the present invention, similarly to claim 20, with respect to the speed of the hybrid vehicle and the required driving force required for the drive wheels, there are set, for each speed position for the motive power of the engine, the engine travel region which includes the optimum fuel economy line at which the fuel consumption of the engine is minimized, and the assist travel region and the charge travel region arranged on respective sides of the engine travel region where the required driving force is larger and smaller than in the engine travel region, as regions each of which makes it possible to obtain smaller fuel consumption among the travel modes.

Further, the engine travel mode is selected as the travel mode when the combination of the speed of the hybrid vehicle and the required driving force belongs to the engine travel region. Thus, when the required driving force is not equal to the driving force of the engine corresponding to the smallest fuel consumption ratio but is close thereto, by selecting the engine travel mode, it is possible to obtain a smaller fuel consumption, thereby making it possible to improve the fuel economy of the hybrid vehicle. Further, only by referring to the set travel regions according to the speed and the required driving force of the hybrid vehicle, it is possible to easily and properly determine a travel mode, and smoothly switch between the engine travel mode and the assist travel mode or the charge travel mode, without requiring complicated computation, etc.

The invention according to claim 22 is the control system as recited in claim 18 or 21, wherein when the speed position for the motive power of the engine 3 is a speed position of the second transmission mechanism 31, the assist travel region and the charge travel region for the speed position are divided into a plurality of regions in association with speed-changing patterns, respectively, which each are a combination of a speed position for the motive power of the engine 3 and a speed position for motive power of the electric motor 4 in the first transmission mechanism 11 and make it possible to obtain smallest fuel consumption, and wherein the selection means selects a speed-changing pattern associated with a region to which a combination of the speed of the hybrid vehicle V and the required driving force belongs, out of the plurality of regions.

In the hybrid vehicle according to claim 18 or 21, when the speed of the motive power of the engine is changed by the second transmission mechanism, a speed position different from the speed position for the motive power of the engine can be selected as the speed position for the motive power of the electric motor in the first transmission mechanism. Further, when a powering operation is performed by the electric motor, the efficiency of the electric motor includes the discharging efficiency of the storage battery, the driving efficiency of the electric motor, and the motive power transmission efficiency of the first transmission mechanism, and when regeneration by the electric motor is performed, the efficiency of the electric motor includes the motive power transmission efficiency of the first transmission mechanism, the power generation efficiency of the electric motor, and the charging efficiency of the storage battery. Further, when the speed position for the motive power of the electric motor in the first transmission mechanism is different, the rotational speed of the electric motor accordingly changes, and hence the efficiency of the electric motor also changes.

According to the present invention, when the speed position for the motive power of the engine is one of the speed positions of the second transmission mechanism, each of the assist travel region and the charge travel region for use in the speed position is divided into a plurality of regions in association with each speed-changing pattern (combination of a speed position for the motive power of the engine and a speed position for the motive power of the electric motor in the first transmission mechanism) which makes it possible to obtain the smallest fuel consumption. Then, from these regions, a region is determined to which the combination of the speed of the hybrid vehicle and the required driving force belongs, and a speed-changing pattern associated with the region is selected. This makes it possible, when the speed position for the motive power of the engine is one of the speed positions of the second transmission mechanism, to properly select a speed position for the motive power of the electric motor, which makes it possible to obtain the smallest fuel consumption.

The invention according to claim 23 is the control system as recited in any one of claims 18 to 22, wherein when a temperature (battery temperature TB) of at least one of the electric motor 4 and the storage battery is not lower than a predetermined temperature set for the at least one of the electric motor and the storage battery, an output of the electric motor 4 is limited.

With this configuration, when the temperature of the at least one of the electric motor and the storage battery is not lower than the predetermined temperature set for the at least one of the electric motor and the storage battery, that is, when the at least one is in a relatively high-temperature condition, the output of the electric motor is limited. Therefore, it is possible to suppress a rise in the temperature of the at least one of the electric motor and the storage battery.

The invention according to claim 24 is the control system as recited in any one of claims 18 to 23, wherein when a state of charge (state of charge SOC) of the storage battery is not larger than a predetermined value, an operation of the electric motor 4 is controlled such that an amount of regeneration by the electric motor 4 is increased.

With this configuration, when the state of charge of the storage battery is not larger than the predetermined value, and is relatively small, the operation of the electric motor is controlled such that the amount of regeneration by the electric motor is increased. Therefore, it is possible to positively restore a reduced state of charge of the storage battery.

The invention according to claim 25 is the control system as claimed in claim 22, wherein in the case where the speed position for the motive power of the engine 3 is a speed position of the second transmission mechanism 31, when an amount of change in a degree (accelerator pedal opening AP) of opening of an accelerator pedal is larger than a predetermined value, an assist travel mode is selected which uses a lower speed position of the first transmission mechanism 11 than the speed position for the motive power of the engine 3 as a speed position for the motive power of the electric motor 4.

With this configuration, when the amount of change in the degree of opening of the accelerator pedal is larger than the predetermined value, i.e. when an acceleration demand by the driver is high, the assist travel mode is selected which uses a lower speed position of the first transmission mechanism than the speed position for the motive power of the engine, as the speed position for the motive power of the electric motor. This makes it possible to transmit larger torque than torque corresponding to the acceleration demand by the driver, to the drive wheels, whereby it is possible to improve drivability.

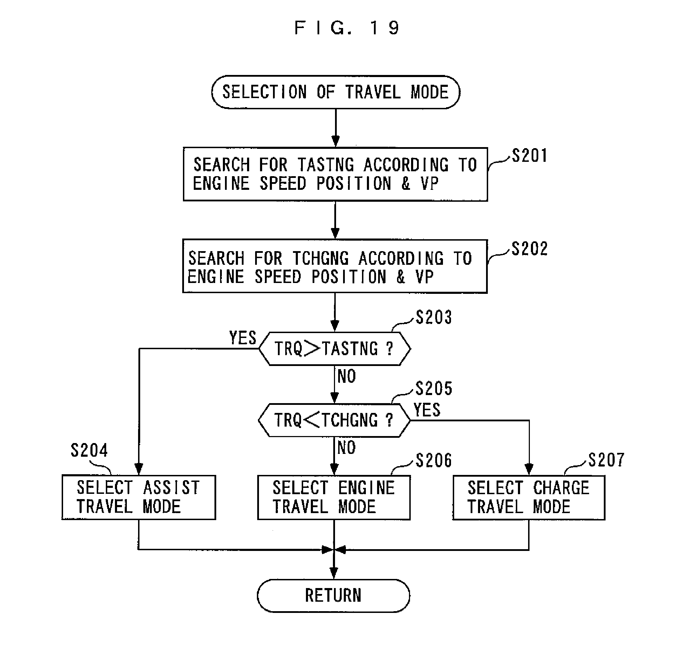

To attain the above third object, the present invention according to claim 26 is a method of controlling a hybrid vehicle including an internal combustion engine 3, an electric motor 4 capable of generating electric power, a storage battery (battery 52) capable of supplying and receiving electric power to and from the electric motor 4, a first transmission mechanism 11 that is capable of receiving motive power from an engine output shaft (crankshaft 3a) of the engine 3 and the electric motor 4 by a first input shaft 13, and transmitting the motive power to drive wheels DW in a state in which a speed of the motive power is changed in one of a plurality of speed positions, a second transmission mechanism 31 that is capable of receiving motive power from the engine output shaft by a second input shaft 32, and transmitting the motive power to the drive wheels in a state in which a speed of the motive power is changed in one of a plurality of speed positions, a first clutch C1 that is capable of engaging between the engine output shaft and the first transmission mechanism 11, and a second clutch C2 that is capable of engaging between the engine output shaft and the second transmission mechanism 31, wherein travel modes of the hybrid vehicle include an engine travel mode in which the hybrid vehicle travels using only the motive power of the engine 3, an assist travel mode in which the hybrid vehicle travels while having the motive power of the engine 3 assisted with motive power of the electric motor 4, and a charge travel mode in which the hybrid vehicle travels while performing electric charging with the electric motor 4 and the storage battery using part of the motive power of the engine 3, the method comprising setting, with respect to a speed (vehicle VP) of the hybrid vehicle V and required driving force (required torque TRQ) required for the drive wheels DW, for each speed position for the motive power of the engine 3, an assist inhibiting line which connects points where fuel consumption (total fuel consumption ratio TSFC) obtained in the engine travel mode and fuel consumption obtained in the assist travel mode match each other, on a side of an optimum fuel economy line at which fuel consumption of the engine 3 is minimized, where a required driving force is larger than on the optimum fuel economy line, and setting a charge inhibiting line which connects points where the fuel consumption obtained in the engine travel mode and fuel consumption obtained in the charge travel mode match each other, on a side of the optimum fuel economy line, where the required driving force is smaller than on the optimum fuel economy line, and selecting, according to the speed position for the motive power of the engine 3, the speed of the hybrid vehicle V, and the required driving force, the engine travel mode when the required driving force is not above the assist inhibiting line and is not below the charge inhibiting line (steps 203, 205, 206 in FIG. 19), the assist travel mode when the required driving force is above the assist inhibiting line (steps 203, 204 in FIG. 19), and the charge travel mode when the required driving force is below the charge inhibiting line (steps 205, 207) .

According to the present invention, control of the hybrid vehicle which has the same construction as the invention according to claim 18 is performed as follows: First, the assist inhibiting line and the charge inhibiting line are set with respect to the speed of the hybrid vehicle and the required driving force, for each speed position for the motive power of the engine. The assist inhibiting line is set on a side of the optimum fuel economy line at which the fuel consumption of the engine is minimized, where the required driving force is larger than on the optimum fuel economy line, and connects the points where the fuel consumption obtained in the engine travel mode and the fuel consumption obtained in the assist travel mode match each other. Further, the charge inhibiting line is set on a side of the optimum fuel economy line, where the required driving force is smaller than on the optimum fuel economy line, and connects the points where the fuel consumption obtained in the engine travel mode and the fuel consumption obtained in the charge travel mode match each other.

Then, according to the present invention, according to the speed and the required driving force of the hybrid vehicle, when the required driving force is not above the assist inhibiting line and is not below the charge inhibiting line, the engine travel mode is selected. Thus, when the required driving force is not equal to the driving force of the engine corresponding to the smallest fuel consumption ratio but is close thereto, the engine travel mode is selected. Further, when the required driving force is above the assist inhibiting line, the assist travel mode is selected, and when the required driving force is below the charge inhibiting line, the charge travel mode is selected. From the above, it is possible to properly select the travel mode according to the required driving force and obtain smaller fuel consumption in any of the travel modes, thereby making it possible to improve the fuel economy of the hybrid vehicle.

Further, only by referring to relations to the assist inhibiting line and the charge inhibiting line, it is possible to easily and properly determine the travel mode according to the speed and the required driving force of the hybrid vehicle, and smoothly switch between the engine travel mode and the assist travel mode or the charge travel mode.

The invention according to claim 27 is the control system as recited in any one of claims 1, 2, 10, 11, and 18 to 24, wherein the hybrid vehicle V is equipped with a car navigation system 68 storing data indicative of information on a road on which the hybrid vehicle is traveling and neighborhood roads, the control system further comprising prediction means (ECU 2) for predicting a traveling situation of the hybrid vehicle based on the data stored in the car navigation system 68, wherein selection of the travel mode is performed according to the predicted traveling situation of the hybrid vehicle V.

With this configuration, the traveling situation of the hybrid vehicle is predicted by the prediction means based on the data indicative of information on the road on which the hybrid vehicle is traveling and the neighborhood roads, and the speed position is selected according to the predicted traveling situation of the hybrid vehicle. This makes it possible to select in advance a speed position suitable for the traveling situation of the hybrid vehicle.

A diagram schematically showing a hybrid vehicle to which a control system according to the present invention is applied.

A block diagram showing an ECU etc. of the control system.

A flowchart of a process for selecting a speed position of a first transmission mechanism during a deceleration regeneration mode of the hybrid vehicle.

A view showing an example of a conversion efficiency map.

A timing diagram showing an example of an operation performed by the control system when the speed position of the first transmission mechanism is changed from a third speed position to a first speed position during the deceleration regeneration mode.

A timing diagram showing an example of an operation performed by the control system when the speed position of the first transmission mechanism is held at the third speed position during the deceleration regeneration mode.

A flowchart of a variation of the process for setting the speed position of the first transmission mechanism during the deceleration regeneration mode.

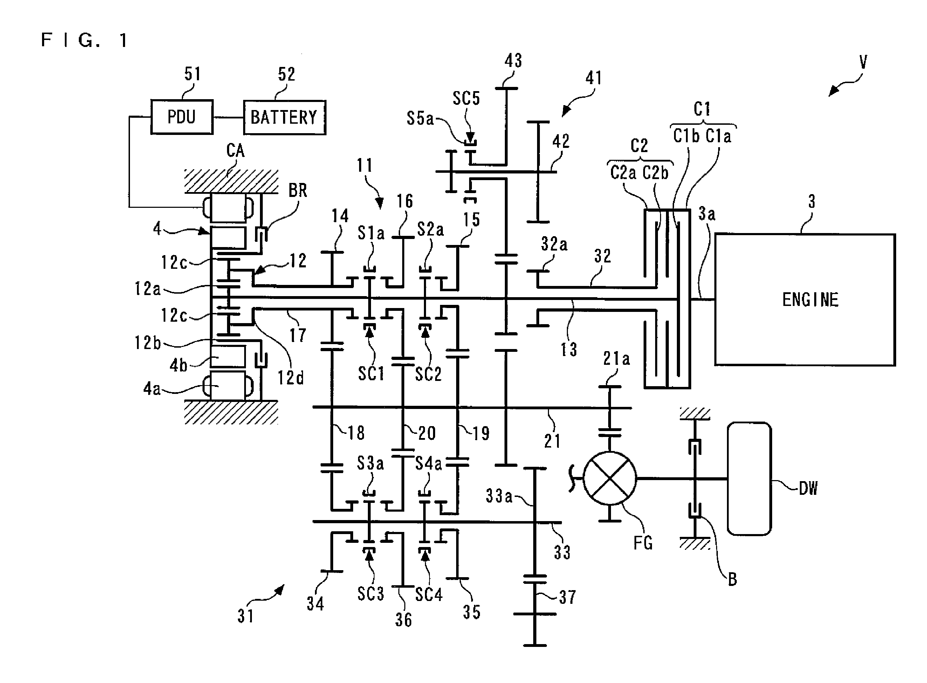

A diagram schematically showing a hybrid vehicle different from the FIG. 1 hybrid vehicle, to which the control system according to the present invention is applied.

A flowchart of a control process executed by the hybrid vehicle.

A flowchart of a charging-preferred travel control process.

A view showing an example of a charge amount map.

A view of an example of a map showing a total fuel consumption ratio determined in an engine travel mode.

A view of an example of a map showing a total fuel consumption ratio determined in an assist travel mode and a charge travel mode.

A view showing a relationship in total fuel consumption ratio between travel modes.

A view showing an example of a total fuel consumption ratio map for use when a speed position for motive power of the engine is a third speed position.

A view showing an example of a total fuel consumption ratio map for use when the speed position for the motive power of the engine is a fourth speed position.

A view showing an example of a total fuel consumption ratio map for use when the speed position for the motive power of the engine is a fifth speed position.

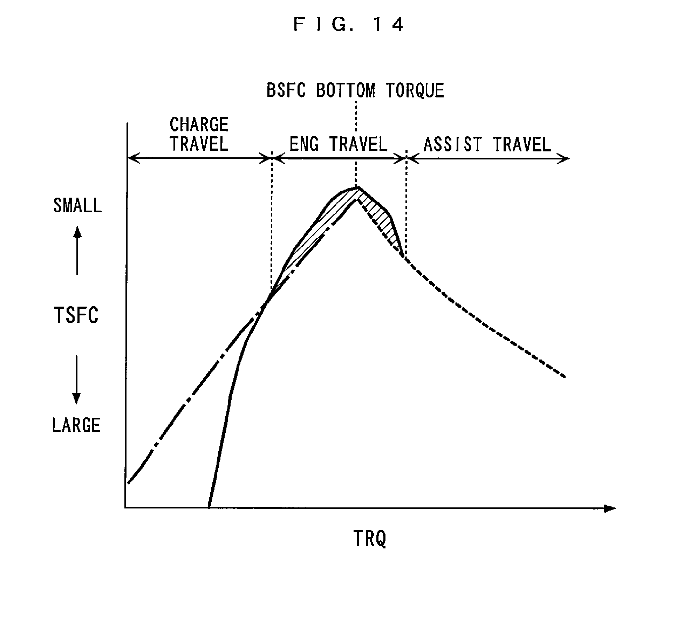

A view showing a relationship in total fuel consumption ratio between travel modes, based on the total fuel consumption ratio maps in FIGS. 14 to 16.

A flowchart of a travel mode selection process.

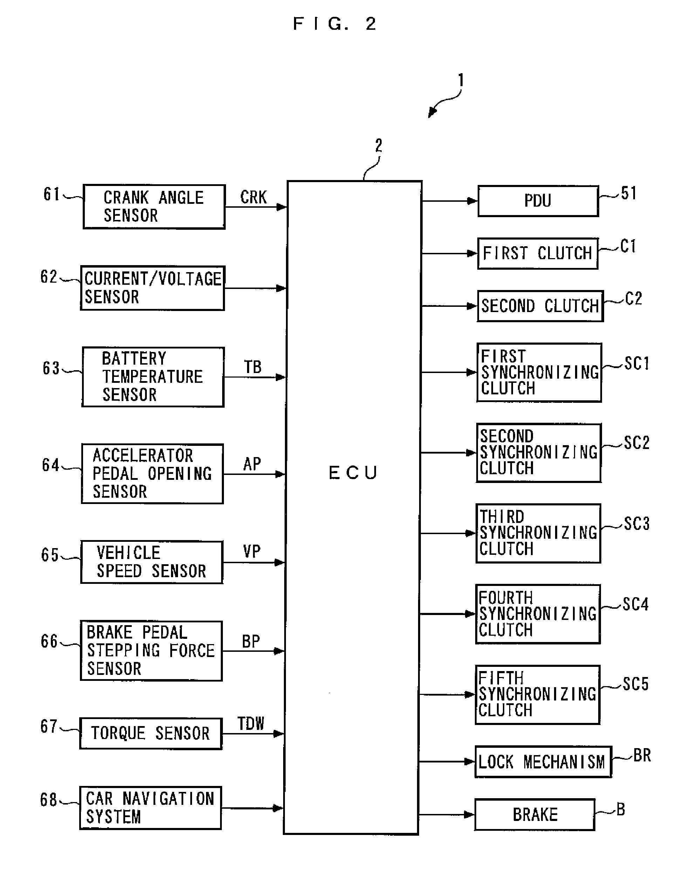

Hereafter, details of a preferred embodiment of the present invention will be described with reference to drawings. Note that the present invention is by no means limited to this embodiment. Further, component elements of the present embodiment include component elements that can be easily thought of by those skilled in the art and component elements which are substantially the same as those in the present embodiment. A hybrid vehicle V shown in FIG. 1 is a four-wheel vehicle comprising a pair of drive wheels DW (only one of which is shown) and a pair of driven wheels (not shown), and is equipped with an internal combustion engine (hereinafter referred to as the "engine") 3 and an electric motor (hereinafter referred to as the "motor") 4 capable of generating electric power, as motive power sources. The engine 3 is a gasoline engine including a plurality of cylinders, and includes a crankshaft 3a. A fuel injection amount, fuel injection timing, ignition timing, etc. of the engine 3 are controlled by an ECU 2 of a control system 1 shown in FIG. 2.

The motor 4 is a general one-rotor-type brushless DC motor, which is a so-called motor generator, and includes a fixed stator 4a, and a rotatable rotor 4b. The stator 4a generates a rotating magnetic field, and is formed e.g. by an iron core and three-phase coils. Further, the stator 4a is mounted on a casing CA fixed to the hybrid vehicle V, and is electrically connected to a battery 52, which is capable of being charged and discharged, via a power drive unit (hereinafter referred to as the "PDU") 51. The PDU 51 is formed by an electric circuit, such as an inverter, and is electrically connected to the ECU 2 (see FIG. 2). The above-mentioned rotor 4b is composed of e.g. magnets, and is disposed in a manner opposed to the stator 4a.

In the motor 4 constructed as above, when the ECU 2 controls the PDU 51 to thereby supply electric power from the battery 52 to the stator 4a via the PDU 51, the rotating magnetic field is generated, and accordingly the electric power is converted to a motive power, by which the rotor 4b is rotated. In this case, the electric power supplied to the stator 4a is controlled whereby the motive power of the rotor 4b is controlled.

Further, when the rotor 4b is being rotated by input of motive power in a state in which supply of the electric power to the stator 4a is stopped, the ECU 2 controls the PDU 51 to thereby generate the rotating magnetic field. Accordingly, the motive power input to the rotor 4b is converted to electric power to perform power generation, and generated electric power is charged into the battery 52. Further, the ECU 2 controls the stator 4a, on an as-needed basis, to thereby control the motive power transmitted to the rotor 4b.

Further, the hybrid vehicle V is equipped with a driving force transmission system for transmitting the motive power of the engine 3 and the motor 4 to the drive wheels DW of the hybrid vehicle V. This driving force transmission system includes a dual clutch transmission comprising a first transmission mechanism 11 and a second transmission mechanism 31.

The first transmission mechanism 11 transmits the input motive power to the drive wheels DW after changing the speed thereof in one of a first speed position, a third speed position, a fifth speed position, and a seventh speed position. The first speed position to the seventh speed position have their transmission gear ratios set to higher-speed values as the number of the speed position is larger. Specifically, the first transmission mechanism 11 includes a first clutch C1, a planetary gear unit 12, a first input shaft 13, a third speed gear 14, a fifth speed gear 15, and a seventh speed gear 16, which are arranged coaxially with the crankshaft 3a of the engine 3.

The first clutch C1 is a dry multiple-disc clutch, and is formed e.g. by an outer clutch member C1a integrally mounted on the crankshaft 3a, and an inner clutch member C1b integrally mounted on one end of the first input shaft 13. The first clutch C1, which is controlled by the ECU 2, engages the first input shaft 13 with the crankshaft 3a when in an engaged state, and releases the engagement between the first input shaft 13 and the crankshaft 3a when in a disengaged state, to thereby disconnect between the two 13 and 3a.

The planetary gear unit 12 is of a single planetary type, and includes a sun gear 12a, a ring gear 12b which is rotatably provided around an outer periphery of the sun gear 12a and has a larger number of gear teeth than those of the sun gear 12a, a plurality of (e.g. three) planetary gears 12c (only two of which are shown) in mesh with the gears 12a and 12b, and a rotatable carrier 12d rotatably supporting the planetary gears 12c.

The sun gear 12a is integrally mounted on the other end of the first input shaft 13. The other end of the first input shaft 13 further has the rotor 4b of the above-described motor 4 integrally mounted thereon. The first input shaft 13 is rotatably supported by bearings (not shown) . With the above arrangement, the first input shaft 13, the sun gear 12a, and the rotor 4b rotate in unison with each other.

Further, the ring gear 12b is provided with a lock mechanism BR. The lock mechanism BR is of an electromagnetic type, and is turned on or off by the ECU 2. In an ON state, the lock mechanism BR holds the ring gear 12b unrotatable, whereas in an OFF state, the lock mechanism BR permits rotation of the ring gear 12b. Note that a synchronizing clutch may be used as the lock mechanism BR.

The carrier 12d is integrally mounted on a hollow cylindrical rotating shaft 17. The rotating shaft 17 is relatively rotatably arranged outside the first input shaft 13, and is rotatably supported by bearings (not shown).

The third speed gear 14 is integrally mounted on the rotating shaft 17, and is rotatable in unison with the rotating shaft 17 and the carrier 12d. Further, the fifth speed gear 15 and the seventh speed gear 16 are rotatably provided on the first input shaft 13. Furthermore, the third speed gear 14, the seventh speed gear 16, and the fifth speed gear 15 are arranged side by side between the planetary gear unit 12 and the first clutch C1 in the mentioned order.

Further, the first input shaft 13 is provided with a first synchronizing clutch SC1 and a second synchronizing clutch SC2. The first synchronizing clutch SC1 includes a sleeve S1a, and a shift fork and an actuator (neither of which is shown) . Under the control of the ECU 2, the first synchronizing clutch SC1 causes the sleeve S1a to move in an axial direction of the first input shaft 13, to thereby selectively engage the third speed gear 14 or the seventh speed gear 16 with the first input shaft 13.

The second synchronizing clutch SC2 is constructed similarly to the first synchronizing clutch SC1, and under the control of the ECU 2, causes a sleeve S2a to move in an axial direction of the first input shaft 13 to thereby engage the fifth speed gear 15 with the first input shaft 13.

Further, a first driven gear 18, a second driven gear 19, and a third driven gear 20 are in mesh with the third speed gear 14, the fifth speed gear 15, and the seventh speed gear 16, respectively. These first to third driven gears 18 to 20 are integrally mounted on an output shaft 21. The output shaft 21 is rotatably supported by bearings (not shown), and is disposed in parallel with the first input shaft 13. Further, a gear 21a is integrally mounted on the output shaft 21. The gear 21a is in mesh with a gear of a final reduction gear box FG including a differential gear. The output shaft 21 is connected to the drive wheels DW via the gear 21a and the final reduction gear box FG.

In the first transmission mechanism 11 constructed as above, gear positions of the first speed position and the third speed position are formed by the planetary gear unit 12, the third speed gear 14, and the first driven gear 18, and a gear position of the fifth speed position is formed by the fifth speed gear 15 and the second driven gear 19. A gear position of the seventh speed position is formed by the seventh speed gear 16 and the third driven gear 20. Further, motive power input to the first input shaft 13 is transmitted to the drive wheels DW via the output shaft 21, the gear 21a, and the final reduction gear box FG, while having the speed thereof changed in one of the first speed position, the third speed position, the fifth speed position, and the seventh speed position.

The above-described second transmission mechanism 31 transmits the input motive power to the drive wheels DW while changing the speed of the motive power in one of the second speed position, the fourth speed position, and the sixth speed position. The second speed position to the sixth speed position have their transmission gear ratios set to higher-speed values as the number of the speed position is larger. Specifically, the second transmission mechanism 31 includes a second clutch C2, a second input shaft 32, a second input intermediate shaft 33, a second speed gear 34, a fourth speed gear 35, and a sixth speed gear 36. The second clutch C2 and the second input shaft 32 are arranged coaxially with the crankshaft 3a.

Similarly to the first clutch C1, the second clutch C2 is a dry multiple-disc clutch, and is formed by an outer clutch member C2a integrally mounted on the crankshaft 3a, and an inner clutch member C2b integrally mounted on one end of the second input shaft 32. The second clutch C2, which is controlled by the ECU 2, engages the second input shaft 32 with the crankshaft 3a when in an engaged state and releases the engagement between the second input shaft 32 and the crankshaft 3a when in a disengaged state to thereby disconnect between the two 32 and 3a.

The second input shaft 32 is formed into a hollow cylindrical shape. The second input shaft 32 is relatively rotatably arranged outside the first input shaft 13, and is rotatably supported by bearings (not shown). Further, a gear 32a is integrally mounted on the other end of the second input shaft 32.

The second input intermediate shaft 33 is rotatably supported by bearings (not shown), and is disposed in parallel with the second input shaft 32 and the above-described output shaft 21. A gear 33a is integrally mounted on the second input intermediate shaft 33. An idler gear 37 is in mesh with the gear 33a. The idler gear 37 is in mesh with the gear 32a of the second input shaft 32. Note that in FIG. 1, the idler gear 37 is illustrated at a position away from the gear 32a, for convenience of illustration. The second input intermediate shaft 33 is connected to the second input shaft 32 via the gear 33a, the idler gear 37, and the gear 32a.

The second speed gear 34, the sixth speed gear 36, and the fourth speed gear 35 are rotatably arranged on the second input intermediate shaft 33 in the mentioned order, and are in mesh with the above-described first driven gear 18, third driven gear 20, and second driven gear 19, respectively. Further, a third synchronizing clutch SC3 and a fourth synchronizing clutch SC4 are provided on the second input intermediate shaft 33. Both the synchronizing clutches SC3 and SC4 are constructed similarly to the first synchronizing clutch SC1.

Under the control of the ECU 2, the third synchronizing clutch SC3 causes a sleeve S3a thereof to move in an axial direction of the second input intermediate shaft 33, to thereby selectively engage the second speed gear 34 or the sixth speed gear 36 with the second input intermediate shaft 33. Under the control of the ECU 2, the fourth synchronizing clutch SC4 causes a sleeve S4a thereof to move in an axial direction of the second input intermediate shaft 33, to thereby engage the fourth speed gear 35 with the second input intermediate shaft 33.

In the second transmission mechanism 31 constructed as above, a gear position of the second speed position is formed by the second speed gear 34 and the first driven gear 18, and a gear position of the fourth speed position is formed by the fourth speed gear 35 and the second driven gear 19. A gear position of the sixth speed position is formed by the sixth speed gear 36 and the third driven gear 20. Further, motive power input to the second input shaft 32 is transmitted to the second input intermediate shaft 33 via the gear 32a, the idler gear 37, and the gear 33a, and the motive power transmitted to the second input intermediate shaft 33 is transmitted to the drive wheels DW via the output shaft 21, the gear 21a, and the final reduction gear box FG, while having the speed thereof changed in one of the second speed position, the fourth speed position, and the sixth speed position.

As describe above, the output shaft 21 for transmitting motive power changed in speed to the drive wheels DW is shared by the first and second transmission mechanisms 11 and 31.

Further, the driving force transmission system is provided with a reverse mechanism 41. The reverse mechanism 41 comprises a reverse shaft 42, a reverse gear 43, and a fifth synchronizing clutch SC5 including a sleeve S5a. To cause the hybrid vehicle V to travel backward, the reverse mechanism 41 under the control of the ECU 2 causes the sleeve S5a to move in an axial direction of the reverse shaft 42, to thereby engage the reverse gear 43 with the reverse shaft 42.

Furthermore, the hybrid vehicle V is provided with a brake B for decelerating the hybrid vehicle V. The brake B is an electric servo brake, and has operation thereof controlled by the ECU 2.

Further, as shown in FIG. 2, a CRK signal is input from a crank angle sensor 61 to the ECU 2. The CRK signal is a pulse signal which is delivered along with rotation of the crankshaft 3a of the engine 3, whenever the crankshaft 3a rotates through a predetermined crank angle. The ECU 2 calculates an engine speed NE based on the CRK signal. Further, detection signals indicative of current and voltage values of electric current flowing into and out of the battery 52 are input from a current/voltage sensor 62 to the ECU 2. The ECU 2 calculates a state of charge SOC of the battery 52 based on the detection signals.

Furthermore, a detection signal indicative of a detected temperature of the battery 52 (hereinafter referred to as the "battery temperature") TB is input from a battery temperature sensor 63 to the ECU 2. Also input to the ECU 2 are a detection signal indicative of an accelerator pedal opening AP which is a stepped-on amount of an accelerator pedal (not shown) of the hybrid vehicle V, from an accelerator pedal opening sensor 64, and a detection signal indicative of a vehicle speed VP, from a vehicle speed sensor 65. Further input to the ECU 2 are a detection signal indicative of a brake pedal stepping force BP, which is a force with which a brake pedal (not shown) of the hybrid vehicle V is stepped on, from a brake pedal stepping force sensor 66, and a detection signal indicative of torque of the drive wheels DW (hereinafter referred to as the "drive wheel torque") TDW from a torque sensor 67. Further, data stored in a car navigation system 68 and indicative of information on a road on which the hybrid vehicle V is traveling and neighborhood roads is input to the ECU 2 as required.

The ECU 2 is implemented by a microcomputer comprising an I/O interface, a CPU, a RAM, and a ROM, and controls the operation of the hybrid vehicle V based on the detection signals from the aforementioned sensors 61 to 67 and the data from the car navigation system 68, according to control programs stored in the ROM.

The travel modes of the hybrid vehicle V constructed as above include an ENG travel mode, an EV travel mode, an assist travel mode, a charge travel mode, a deceleration regeneration mode, and an ENG start mode. The operation of the hybrid vehicle V in each travel mode is controlled by the ECU 2. Hereafter, a description will be given of the travel modes one by one.

### [ENG travel mode]

The ENG travel mode is a travel mode for using only the engine 3 as a motive power source. In the ENG travel mode, the motive power of the engine 3 (hereinafter referred as the "engine motive power") is controlled by controlling the fuel injection amount, the fuel injection timing, and the ignition timing of the engine 3. Further, the engine motive power is transmitted to the drive wheels DW while having the speed thereof changed by the first or second transmission mechanism 11 or 31.

First, a description will be sequentially given of operations performed when the speed of the engine motive power is changed by the first transmission mechanism 11 in one of the first speed position, the third speed position, the fifth speed position, and the seventh speed position. In this case, in all of the above-mentioned speed positions, the first input shaft 13 is engaged with the crankshaft 3a by controlling the first clutch C1 to the engaged state, and engagement of the second input intermediate shaft 33 with the crankshaft 3a is released by controlling the second clutch C2 to the disengaged state. Further, engagement of the reverse gear 43 with the reverse shaft 42 is released by controlling the fifth synchronizing clutch SC5.

In the case of the first speed position, the ring gear 12b is held unrotatable by controlling the lock mechanism BR to an ON state, and engagement of the third speed gear 14, the fifth speed gear 15, and the seventh speed gear 16 with the first input shaft 13 is released by the first and second synchronizing clutches SC1 and SC2.

With the above operations, the engine motive power is transmitted to the output shaft 21 via the first clutch C1, the first input shaft 13, the sun gear 12a, the planetary gears 12c, the carrier 12d, the rotating shaft 17, the third speed gear 14, and the first driven gear 18, and is further transmitted to the drive wheels DW via the gear 21a and the final reduction gear box FG. At this time, since the ring gear 12b is held unrotatable as described above, the engine motive power transmitted to the first input shaft 13 is reduced in speed at a transmission gear ratio corresponding to a tooth number ratio between the sun gear 12a and the ring gear 12b, and is thereafter transmitted to the carrier 12d. Further, the engine motive power is reduced in speed at a transmission gear ratio corresponding to a tooth number ratio between the third speed gear 14 and the first driven gear 18, and is thereafter transmitted to the output shaft 21. As a consequence, the engine motive power is transmitted to the drive wheels DW while having the speed thereof changed at a transmission gear ratio of the first speed position determined by the above-described two transmission gear ratios.

In the case of the third speed position, the rotation of the ring gear 12b is permitted by controlling the lock mechanism BR to the OFF state, and only the third speed gear 14 is engaged with the first input shaft 13 by controlling the first and second synchronizing clutches SC1 and SC2.

With the above operations, the engine motive power is transmitted to the output shaft 21 from the first input shaft 13 via the third speed gear 14 and the first driven gear 18. In this case, since the third speed gear 14 is engaged with the first input shaft 13 as described above, the sun gear 12a, the carrier 12d, and the ring gear 12b idly rotate in unison with each other. For this reason, in the case of the third speed position, differently from the case of the first speed position, the engine motive power is transmitted to the drive wheels DW, without having the speed thereof reduced by the planetary gear unit 12, while having the speed thereof changed at a transmission gear ratio of the third speed position determined by the tooth number ratio between the third speed gear 14 and the first driven gear 18.

Hereafter, similarly, in the case of the fifth speed position, only the fifth speed gear 15 is engaged with the first input shaft 13 by controlling the first and second synchronizing clutches SC1 and SC2. With this operation, the engine motive power is transmitted to the output shaft 21 from the first input shaft 13 via the fifth speed gear 15 and the second driven gear 19, and has its speed changed at a transmission gear ratio of the fifth speed position determined by a tooth number ratio between the two gears 15 and 19.

In the case of the seventh speed position, only the seventh speed gear 16 is engaged with the first input shaft 13 by controlling the first and second synchronizing clutches SC1 and SC2. With this operation, the engine motive power is transmitted to the output shaft 21 from the first input shaft 13 via the seventh speed gear 16 and the third driven gear 20, and has its speed changed at a transmission gear ratio of the seventh speed position determined by a tooth number ratio between the two gears 16 and 20.

Next, a description will be sequentially given of operations performed when the engine motive power is changed in speed by the second transmission mechanism 31 in each one of the second speed position, the fourth speed position, and the sixth speed position. In this case, in all of these speed positions, engagement of the first input shaft 13 with the crankshaft 3a is released by controlling the first clutch C1 to the disengaged state, and the second input shaft 32 is engaged with the crankshaft 3a by controlling the second clutch C2 to the engaged state. Further, the engagement of the reverse gear 43 with the reverse shaft 42 is released by controlling the fifth synchronizing clutch SC5.

In the case of the second speed position, only the second speed gear 34 is engaged with the second input intermediate shaft 33 by controlling the third and fourth synchronizing clutches SC3 and SC4. With this operation, the engine motive power is transmitted to the output shaft 21 via the second clutch C2, the second input shaft 32, the gear 32a, the idler gear 37, the gear 33a, the second input intermediate shaft 33, the second speed gear 34, and the first driven gear 18, and is further transmitted to the drive wheels DW via the gear 21a and the final reduction gear box FG. At this time, the engine motive power is transmitted to the drive wheels DW while having the speed thereof changed at a transmission gear ratio of the second speed position determined by a tooth number ratio between the second speed gear 34 and the first driven gear 18.

Hereafter, similarly, in the case of the fourth speed position, only the fourth speed gear 35 is engaged with the second input intermediate shaft 33 by controlling the third and fourth synchronizing clutches SC3 and SC4. With this operation, the engine motive power is transmitted to the output shaft 21 from the second input intermediate shaft 33 via the fourth speed gear 35 and the second driven gear 19, and has its speed changed at a transmission gear ratio of the fourth speed position determined by a tooth number ratio between the two gears 35 and 19.

In the case of the sixth speed position, only the sixth speed gear 36 is engaged with the second input intermediate shaft 33 by controlling the third and fourth synchronizing clutches SC3 and SC4. With this operation, the engine motive power is transmitted to the output shaft 21 from the second input intermediate shaft 33 via the sixth speed gear 36 and the third driven gear 20, and has its speed changed at a transmission gear ratio of the sixth speed position determined by a tooth number ratio between the two gears 36 and 20.

### [EV travel mode]

The EV travel mode is a travel mode in which only the motor 4 is used as a motive power source. In the EV travel mode, the motive power of the motor 4 (hereinafter referred as the "motor motive power") is controlled by controlling electric power supplied from the battery 51 to the motor 4. Further, the motor motive power is transmitted to the drive wheels DW while having the speed thereof changed by the first transmission mechanism 11 in one of the first speed position, the third speed position, the fifth speed position, and the seventh speed position. In this case, in all of these speed positions, engagement of the first and second input shafts 13 and 32 with the crankshaft 3a is released by controlling the first and second clutches C1 and C2 to the disengaged state. This disconnects the motor 4 and the drive wheels DW from the engine 3, and hence the motor motive power is prevented from being wastefully transmitted to the engine 3. Further, the engagement of the reverse gear 43 with the reverse shaft 42 is released by controlling the fifth synchronizing clutch SC5.

In the case of the first speed position, similarly to the case of the ENG travel mode, the ring gear 12b is held unrotatable by controlling the lock mechanism BR to the ON state, and the engagement of the third speed gear 14, the fifth speed gear 15, and the seventh speed gear 16 with the first input shaft 13 is released by controlling the first and second synchronizing clutches SC1 and SC2.

With the above operations, the motor motive power is transmitted to the output shaft 21 via the first input shaft, the sun gear 12a, the planetary gears 12c, the carrier 12d, the rotating shaft 17, the third speed gear 14, and the first driven gear 18. As a consequence, similarly to the case of the ENG travel mode, the motor motive power is transmitted to the drive wheels DW while having the speed thereof changed at the transmission gear ratio of the first speed position.

In the case of the third speed position, similarly to the case of the ENG travel mode, the rotation of the ring gear 12b is permitted by controlling the lock mechanism BR to the OFF state, and only the third speed gear 14 is engaged with the first input shaft 13 by controlling the first and second synchronizing clutches SC1 and SC2. With these operations, the motor motive power is transmitted to the output shaft 21 from the first input shaft 13 via the third speed gear 14 and the first driven gear 18. As a consequence, similarly to the case of the ENG travel mode, the motor motive power is transmitted to the drive wheels DW while having the speed thereof changed at the transmission gear ratio of the third speed position.

In the case of the fifth or seventh speed position, similarly to the case of the ENG travel mode, the lock mechanism BR and the first and second synchronizing clutches SC1 and SC2 are controlled. With these operations, the motor motive power is transmitted to the drive wheels DW while having the speed thereof changed at the transmission gear ratio of the fifth or seventh speed position. Note that during the EV travel mode, the speed position of the first transmission mechanism 11 is set such that high efficiency of the motor 4 can be obtained.

### [Assist travel mode]

The assist travel mode is a travel mode in which the engine 3 is assisted by the motor 4. In the assist travel mode, basically, torque of the engine 3 (hereinafter referred to as the "engine torque") is controlled such that excellent fuel economy of the engine 3 can be obtained. Further, a shortage amount of the engine torque with respect to torque required by a driver for the drive wheels DW (hereinafter referred to as the "required torque") TRQ is compensated for by torque of the motor 4 (hereinafter referred to as the "motor torque"). The required torque TRQ is calculated according to the detected accelerator pedal opening AP.

During the assist travel mode, when the engine motive power has its speed changed by the first transmission mechanism 11 (i.e. when the engine is in an odd-number speed position), a transmission gear ratio for the motor motive power becomes equal to the transmission gear ratio of the speed position set by the first transmission mechanism 11. On the other hand, when the engine motive power has its speed changed by the second transmission mechanism 31 (i.e. when the engine is in an even-number speed position), the transmission gear ratio of one of the first speed position, the third speed position, the fifth speed position, and the seventh speed position of the first transmission mechanism 11 can be selected as the transmission gear ratio for the motor motive power.

Further, during the assist travel mode, for example, when the engine motive power has its speed changed in the second speed position, one of the speed positions of the first transmission mechanism 11 is selected by pre-shifting the speed position, and the motor motive power is transmitted to the output shaft 21 via the first transmission mechanism 11. In this case, the first to third driven gears 18 to 20 of the output shaft 21 are in a state in mesh with both of gears in the odd-number speed position and gears in the even-number speed position, and therefore it is possible to synthesize the engine motive power having its speed changed in the odd-number speed position and the motor motive power having its speed changed in the even-number speed position. Note that the first clutch C1 is controlled to the disengaged state, whereby the engine motive power is not transmitted to the drive wheels DW via the first transmission mechanism 11. Further, the speed position of the first transmission mechanism 11, to which the speed position is pre-shifted, can be freely selected according to the traveling state of the hybrid vehicle V.

### [Charge travel mode]

The charge travel mode is a travel mode in which electric power is generated by converting part of the engine motive power to electric power, and the generated electric power is charged into the battery 52. In the charge travel mode, basically, the engine torque is controlled such excellent fuel economy of the engine 3 can be obtained. Further, electric power is generated by the motor 4 using a surplus amount of the engine torque with respect to the required torque TRQ, and the generated electric power is charged into the battery 52 (regeneration).

Similarly to the case of the assist travel mode, during the charge travel mode, when the engine motive power has its speed changed by the first transmission mechanism 11 (i.e. when the engine is in an odd-number speed position), the transmission gear ratio for the motor motive power becomes equal to the transmission gear ratio of the speed position of the first transmission mechanism 11. Further, when the engine motive power has its speed changed by the second transmission mechanism 12 (i.e. when the engine is in an even-number speed position), the transmission gear ratio of one of the first speed position, the third speed position, the fifth speed position, and the seventh speed position of the first transmission mechanism 11 can be selected as the transmission gear ratio for the motor motive power.

### [Deceleration regeneration mode]

The deceleration regeneration mode is a travel mode in which electric power is generated by the motor 4 using motive power of the drive wheels DW when the hybrid vehicle V is determined to be decelerating, and the generated electric power is charged into the battery 52. Hereinafter, charging electric power generated by the motor 4 into the battery 52 is referred to as the "regeneration", as required. Note that it is determined based on the accelerator pedal opening AP whether or not the hybrid vehicle V is decelerating.

In the deceleration regeneration mode, fuel supply to the engine 3 is interrupted (fuel-cut). Further, the first and second clutches C1 and C2 are controlled, similarly to the case of the EV travel mode. This disconnects the motor 4 and the drive wheels DW from the engine 3, and hence the motor motive power is prevented from being wastefully transmitted to the engine 3. Further, the motive power of the drive wheels DW is transmitted to the motor 4 in a state changed in speed via the final reduction gear box FG, the gear 21a, the output shaft 21, and the first transmission mechanism 11. The motive power transmitted from the drive wheels DW to the motor 4 is converted to electric power, and generated electric power is charged into the battery 52 (regeneration). Along therewith, braking force corresponding to the generated electric power is transmitted from the motor 4 to the drive wheels DW.

Note that when it is impossible to obtain sufficient braking force from the motor 4 during the deceleration regeneration mode, it is possible to engage the first clutch C1 in order to obtain a braking force from engine brake.

### [ENG start mode]

The ENG start mode is an operation mode for starting the engine 3. In the ENG start mode, in a case where the engine 3 is started during stoppage of the hybrid vehicle V, the first input shaft 13 is engaged with the crankshaft 3a by controlling the first clutch C1 to the engaged state, and engagement of the second input shaft 32 with the crankshaft 3a is released by controlling the second clutch C2 to the disengaged state. Further, all the speed positions of the first transmission mechanism 11 are released (changed to neutral positions), whereby the motor motive power is generated.

With the above operations, the motor motive power is transmitted to the crankshaft 3a via the first input shaft 13 and the first clutch C1, whereby the crankshaft 3a is rotated. In this state, the engine 3 is started by controlling the fuel injection amount, the fuel injection timing, and the ignition timing of the engine 3, according to the above-described CRK signal. In this case, although the motor motive power transmitted to the sun gear 12a via the first input shaft 13 is transmitted to the ring gear 12b via the planetary gear 12c, since the rotation of the ring gear 12b is permitted as described above, the ring gear 12b idly rotates, and hence the motor motive power is not transmitted to the drive wheels DW via the carrier 12d and so forth.

Further, in a case where the engine 3 is started during the above-described EV travel mode, the first clutch C1 in the disengaged state is engaged to cause the first input shaft 13 to be engaged with the crankshaft 3a. This causes the motor motive power to be transmitted to the crankshaft 3a to rotate the crankshaft 3a. In this state, by controlling the fuel injection amount, the fuel injection timing, and the ignition timing of the engine 3, according to the CRK signal, the engine 3 is started. In this case, by progressively increasing the engagement force of the first clutch C1, torque transmitted from the motor 4 to the drive wheels DW is prevented from being suddenly reduced, which makes it possible to secure excellent drivability.

Note that during the EV traveling, in a case where the hybrid vehicle V is in a very low-speed condition or in a case where the temperature of the first clutch C1 is high, for example, it is possible to start the engine 3 also by engaging the second clutch C2 instead of engaging the first clutch C1, and selecting an odd-number speed position in order to start the engine 3.

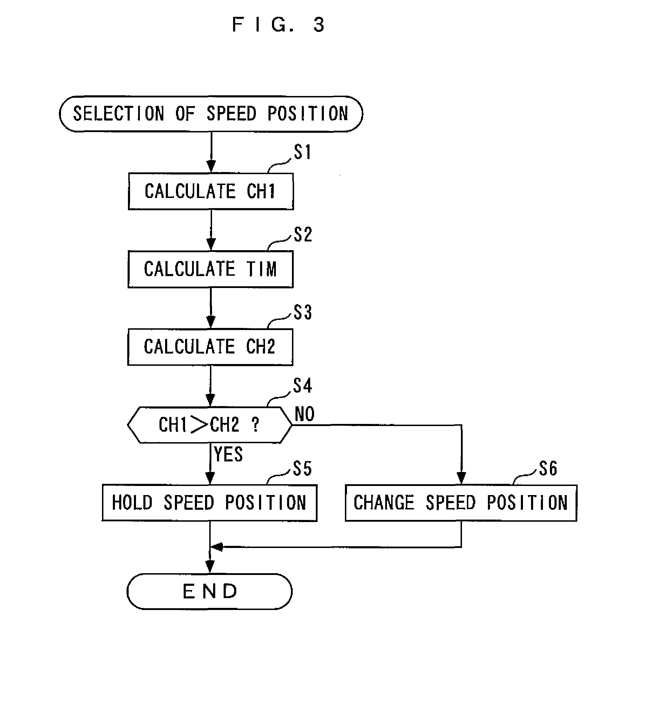

Next, control of the hybrid vehicle V according to the first embodiment of the present invention will be described with reference to FIGS. 3 to 7. This control is performed for controlling the operation of the motor 4 in the above-described deceleration regeneration mode, and selecting one of the speed positions of the first transmission mechanism 11. During the deceleration regeneration mode, basically, electric power generated by the motor 4 is controlled according to the detected brake pedal stepping force BP. This causes the braking force acting from the motor 4 on the driving wheels DW to be controlled to a magnitude corresponding to the brake pedal stepping force BP.

Further, FIG. 3 shows a process for selecting one of the speed positions of the first transmission mechanism 11 during the deceleration regeneration mode. This process is repeatedly executed whenever a predetermined time period elapses. First, in a step 1 (shown as S1 in abbreviated form; the following steps are also shown in abbreviated form), a first charge amount CH1 is calculated. The first charge amount CH1 is a predicted value of the amount of electric power charged into the battery 52 assuming that regeneration by the motor 4 is performed during a time period from the present time until the hybrid vehicle V stops in a state where the speed position of the first transmission mechanism 11 is held at the present speed position.

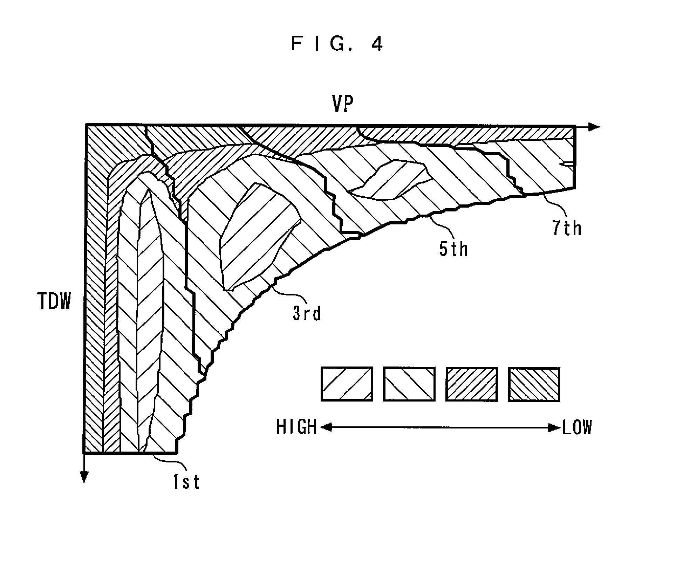

The first charge amount CH1 is calculated as follows: First, electric energy conversion efficiency is calculated by searching a conversion efficiency map shown in FIG. 4 according to the detected vehicle speed VP and drive wheel torque TDW and the present speed position. The electric energy conversion efficiency is conversion efficiency (electric energy/traveling energy) which is to be exhibited when traveling energy of the hybrid vehicle V is converted to electric energy charged into the battery 52. Further, the conversion efficiency map defines the electric energy conversion efficiency in association with the vehicle speed VP and the drive wheel torque TDW on a speed position basis, and is set in advance according to the motive power transmission efficiency of each speed position of the first transmission mechanism 11, the power generation efficiency of the motor 4, and the charging efficiency of the battery 52.

Here, the motive power transmission efficiency is a ratio between torque output of the first transmission mechanism 11 and torque input to the first transmission mechanism 11, the power generation efficiency is a ratio between electric energy generated by the motor 4 and torque input to the motor 4, and the charging efficiency is a ratio between electric energy charged into the battery 52 and electric energy supplied to the battery 52. Further, in FIG. 4, degrees of the electric energy conversion efficiency are represented by hatchings.

Next, torque transmitted to the motor 4 (hereinafter referred to as the "motor-transmitted torque") is calculated by searching a predetermined map (not shown) according to the brake pedal stepping force BP and the present speed position, and the first charge amount CH1 is calculated based on the calculated electric energy conversion efficiency and motor-transmitted torque and vehicle stopping time. The vehicle stopping time is a predicted value of a time period required for the hybrid vehicle V to stop after the present time, and is calculated by searching a predetermined map (not shown) according to the vehicle speed VP and the brake pedal stepping force BP. Note that the calculation of the first charge amount CH1 described above is performed assuming that the brake pedal stepping force BP is not changed.

In a step 2 following the above-described step 1, a speed change duration TIM is calculated. The speed change duration TIM is a time period which, when the present speed position is changed to a target speed position, is required from the start of the change to the completion of the same. Here, the target speed position is set by searching the above-described conversion efficiency map (FIG. 4) according to the vehicle speed VP and the drive wheel torque TDW. Specifically, an electric energy conversion efficiency is calculated based on the conversion efficiency map on a speed position basis, and a speed position associated with the highest one of a plurality of calculated electric energy conversion efficiencies is set as the target speed position. Basically, as the rotational speed of the motor 4 is higher, the power generation efficiency of the motor 4 is higher, whereby the electric energy conversion efficiency as well is higher, and hence the target speed position is set to a lower speed position. As a consequence, the speed position is downshifted.

Further, the speed change duration TIM is calculated by searching a predetermined map (not shown) according to the present speed position and the target speed position. Note that when the present speed position is the target speed position, a step 5, referred to hereinafter, is executed, whereby the speed position of the speed position is held at the present speed position.

Next, a second charge amount CH2 is calculated (step 3) . The second charge amount CH2 is a predicted value of the amount of electric power charged into the battery 52 assuming that the speed position is changed to the target speed position before the hybrid vehicle V stops and the regeneration is performed until the hybrid vehicle V stops. The second charge amount CH2 is calculated as follows:

First, the electric energy conversion efficiency is calculated by searching the power generation efficiency map (FIG. 4) according to the vehicle speed VP, the drive wheel torque TDW, and the target speed position. Next, the motor-transmitted torque is calculated by map search according to the brake pedal stepping force BP and the target speed position, and the second charge amount CH2 is calculated according to the calculated electric energy conversion efficiency and motor-transmitted torque, and post-speed change completion stopping time. This post-speed change completion stopping time is calculated by subtracting the speed change duration TIM calculated in the step 2 from the vehicle stopping time referred to in the description of the step 2.

From the above, the second charge amount CH2 is calculated as the amount of electric power to be charged into the battery 52 when the regeneration is performed during a time period from when the speed change duration TIM has elapsed after the present time to when the hybrid vehicle V stops, in a state where the speed position has been changed to the target speed position. Note that the calculation of the second charge amount CH2 is performed assuming that the brake pedal stepping force BP is not changed.

In a step 4 following the step 3, it is determined whether to hold the speed position or to change it to the target speed position. Specifically, it is determined whether or not the first charge amount CH1 calculated in the above-described step 1 is larger than the second charge amount CH2 calculated in the step 3. If the answer to this question is affirmative (YES) (CH1 > CH2), i.e. if the first charge amount CH1, which is a charge amount calculated assuming that the speed position is held at the present speed position, is larger than the second charge amount CH2, which is a charge amount calculated assuming that the speed position has been changed to the target speed position, it is determined that the speed position should be held at the present speed position. Then, according to the result of the determination, the speed position of the first transmission mechanism 11 is held at the present speed position (step 5), followed by terminating the present process.

On the other hand, if the answer to the question of the above-described step 4 is negative (NO), i.e. if the first charge amount CH1 is not larger than the second charge amount CH2, it is determined that the speed position should be changed to the target speed position. Then, according to the result of the determination, the speed position is changed to the target speed position (step 6), followed by terminating the present process.

Further, in the process of changing the speed position to the target speed position, over a time period from the start of the change to the completion of the same, that is, over a time period from disengagement of the above-described first and second synchronizing clutches SC1 and SC2 to engagement thereof, transmission of motive power between the drive wheels DW and the motor 4 via the first transmission mechanism 11 is interrupted, which makes it impossible to perform regeneration by the motor 4, whereby the braking force generated by the motor 4 along with the regeneration ceases to be transmitted to the drive wheels DW.

For this reason, the ECU 2 determines whether or not the brake B can be operated, and when determining that the brake B can be operated, starts the change of the speed position to the target speed position in the step 6. Further, during the change of the speed position, to decelerate the hybrid vehicle V, the ECU 2 controls the operation of the brake B according to the brake pedal stepping force BP.

Note that when the change of the speed position to the target speed position is started according to the state of the brake B as described above, timing for starting the change of the speed position is delayed from the present time by a time period required for the brake B to be operable after the present time, and therefore the speed change duration TIM is corrected to a longer time period.

Further, during deceleration of the hybrid vehicle V, the ECU 2 determines whether or not one of a first condition that a calculated state of charge SOC is not smaller than an upper limit value, and a second condition that a detected battery temperature TB is not lower than a predetermined temperature is satisfied. If it is determined that one of the first and second conditions is satisfied, the ECU 2 inhibits regeneration by the motor 4 in the deceleration regeneration mode. During inhibition of the regeneration, to decelerate the hybrid vehicle V, the ECU 2 controls the operation of the brake B based on the brake pedal stepping force BP.

Further, the ECU 2 predicts a traveling situation of the hybrid vehicle V based on information on a road on which the hybrid vehicle V is traveling and neighborhood roads, stored in the above-mentioned car navigation system 68. The ECU 2 selects the travel mode according to the predicted traveling situation of the hybrid vehicle V. As a consequence, e.g. when the hybrid vehicle V is predicted to travel downhill, it is expected that the charge amount of the battery 52 will be increased during downhill traveling by the above-described deceleration regeneration mode, and hence the ENG travel mode is selected, whereas when the hybrid vehicle V is predicted to travel uphill, it is expected that the assist travel mode will be selected during uphill traveling, and hence to charge the battery 52 in advance, the charge travel mode is selected.

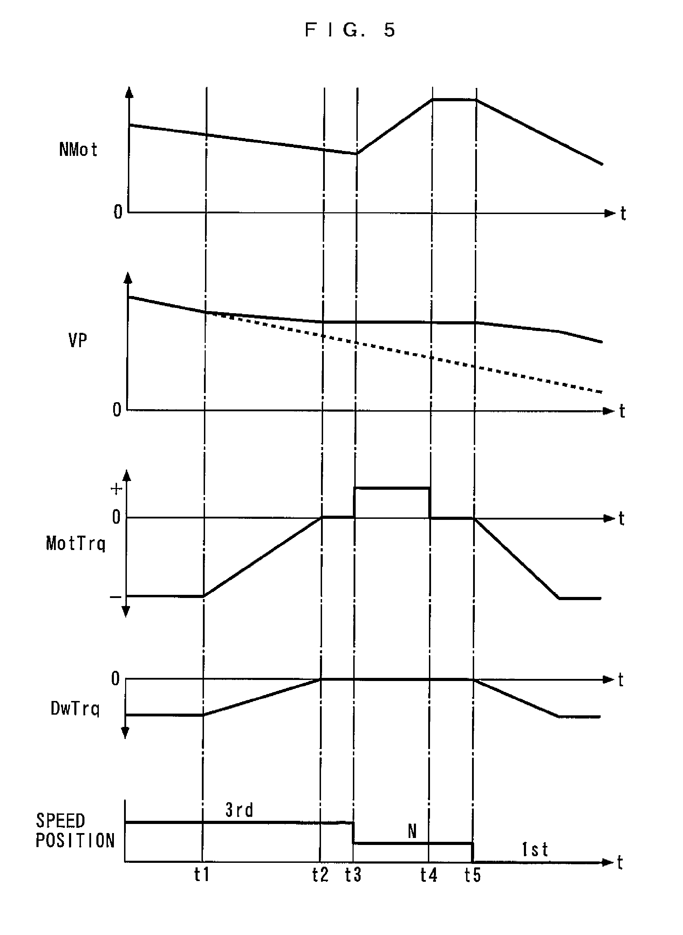

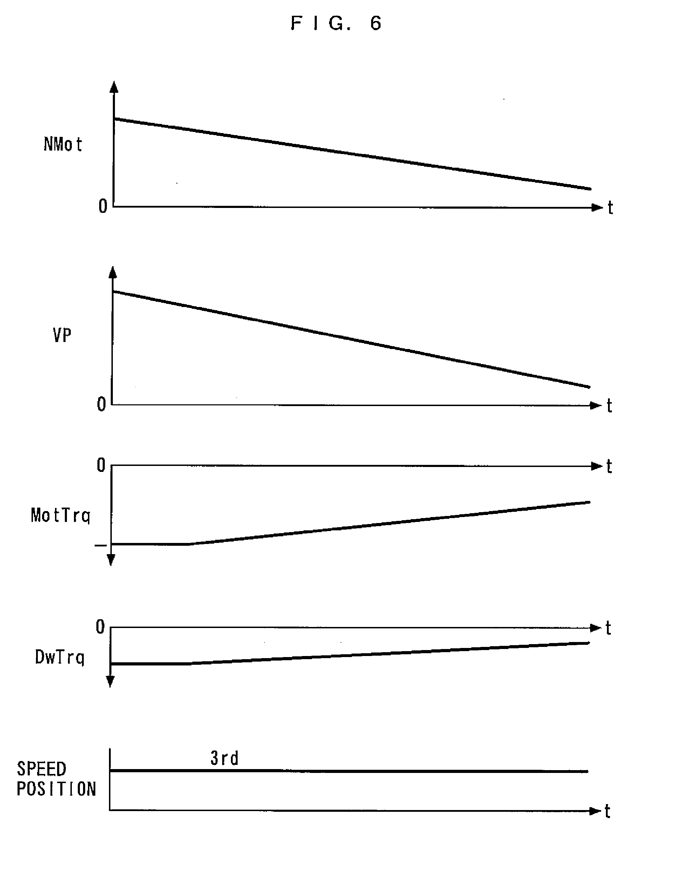

Further, FIGS. 5 and 6 show examples of the operation of the control system 1 in the deceleration regeneration mode. More specifically, FIG. 5 shows an example of a case where the speed position of the first transmission mechanism 11 is changed from the third speed position to the first speed position, and FIG. 6 shows an example of when the speed position of the first transmission mechanism 11 is held at the third speed position.

In FIGS. 5 and 6, NMot represents the rotational speed of the motor 4 (hereinafter referred to as the "motor rotational speed"), and MotTrq represents a motor torque (torque of the motor 4) . DwTrq represents a braking torque which acts on the drive wheels DW from the motor 4 (hereinafter referred to as the "drive wheel braking torque"). The motor torque MotTrq is indicated by a negative value (-) when a braking force due to regeneration is generated by the motor 4, whereas the same is indicated by a positive value (+) when motive power is output by supply of electric power. Further, "speed position" indicates speed positions of the first transmission mechanism 11, 3rd indicates the third speed position, N indicates a neutral position (the lock mechanism BR: OFF state; the third speed gear 14, the fifth speed gear 15 and the seventh speed gear 16: disengaged state), 1st indicates the first speed position. Note that both of FIGS. 5 and 6 show examples of the operation of the control system 1 performed when regeneration is executed by the motor 4 until a predetermined time period elapses. This predetermined time period is set as a time period from the present time until the vehicle speed VP is reduced to a predetermined speed.

As shown in FIG. 5, during the deceleration regeneration mode, regeneration by the motor 4 is performed using motive power transmitted from the drive wheels DW to the motor 4. Accordingly, a braking force is generated by regeneration by the motor 4, whereby the motor toque MotTrq takes a negative value, and the drive wheel braking torque DWTrq acts on the drive wheels DW from the motor 4. This reduces the vehicle speed VP, and accordingly the motor rotational speed NMot is reduced.

Then, when it is determined that the speed position should be changed from the third speed position to the first speed position (steps 4 and 6, time t1), to suppress a speed-change shock caused by the change, the motor toque MotTrq, which is a negative value, is controlled such that it becomes equal to 0. This changes the drive wheel braking torque DWTrq as well such that it becomes equal to 0, and the vehicle speed VP is reduced with a smaller slope than when the speed position is held at the third speed position (a broken line in FIG. 5).

When the motor toque MotTrq becomes equal to 0 (time t2), the speed position is controlled to the neutral position in order to change the speed position to the first speed position. In this case, the speed position is not immediately changed to the neutral position due to the response delay of the first synchronizing clutch SC1. After that, when the speed position is changed to the neutral position (time t3), electric power is supplied from the battery 52 to the motor 4 in order to cause the motor rotational speed NMot to match a speed-changing rotational speed which is determined by a vehicle speed VP at the time and a transmission gear ratio of the first speed position (hereinafter referred to as the "speed-changing rotational speed-matching operation"). This causes the motor toque MotTrq to take a positive value, and increases the motor rotational speed NMot. Further, when the speed position is controlled to the neutral position, the drive wheels DW and the motor 4 are disconnected from each other by the first transmission mechanism 11, and hence no torque is transmitted between the drive wheels DW and the motor 4, so that the drive wheel braking torque DWTrq and the vehicle speed VP are held substantially constant.

When the motor rotational speed NMot has reached the above-mentioned speed-changing rotational speed to complete the speed-changing rotational speed-matching operation (time t4), the supply of electric power from the battery 52 to the motor 4 is stopped, whereby the motor toque MotTrq becomes equal to 0, and the motor 4 rotates by inertia. After that, when the speed position is to be changed from the neutral position to the first speed position, the speed position is not immediately changed to the first speed position due to the response delay of the lock mechanism BR. Then, when the speed position is changed to the first speed position (time t5), regeneration by the motor 4 is restarted, whereby the motor toque MotTrq takes a negative value, and the absolute value thereof is increased. This increases the drive wheel braking torque DWTrq and decreases the vehicle speed VP, and accordingly the motor rotational speed NMot is reduced. In this case, compared with the FIG. 6 case where the speed position is held at the third speed position, it is possible to perform regeneration in the state of the motor rotational speed NMot being high.

On the other hand, as shown in FIG. 6, when the speed position is held at the third speed position, the vehicle speed VP is reduced with a substantially constant slope by a braking force caused by regeneration by the motor 4, and accordingly the motor rotational speed NMot as well is reduced with a substantially constant slope. Further, the motor toque MotTrq takes a negative value, and the amount of electric power generated by the motor 4 is reduced along with the decrease in the vehicle speed VP, whereby the absolute value of the motor toque MotTrq is reduced. This reduces the drive wheel braking torque DWTrq as well.

As described above, according to the present embodiment, when the crankshaft 3a of the engine 3 and the first input shaft 13 of the first transmission mechanism 11 are engaged with each other by the first clutch C1, and also engagement between the crankshaft 3a and the second input shaft 32 of the second transmission mechanism 31 is released by the second clutch C2, the engine motive power is transmitted to the drive wheels DW in a state in which the speed thereof is changed by one of the plurality of speed positions of the first transmission mechanism 11. Further, when engagement between the crankshaft 3a and the first input shaft 13 is released by the first clutch C1, and also the crankshaft 3a and the second input shaft 32 are engaged with each other by the second clutch C2, the engine motive power is transmitted to the drive wheels DW in a state in which the speed thereof is changed by one of the plurality of speed positions of the second transmission mechanism 31. Furthermore, the motor motive power is transmitted to the drive wheels DW in a state in which the speed thereof is changed by one of the plurality of speed positions of the first transmission mechanism 11.

Further, during the deceleration regeneration mode, the first charge amount CH1, which is a predicted value of the amount of electric power charged into the battery 52 assuming that regeneration by the motor 4 is performed in a state where the speed position of the speed position is held at the present speed position until the hybrid vehicle V stops, is calculated (step 1), and the speed change duration TIM is calculated (step 2). Furthermore, the second charge amount CH2, which is a predicted value of the amount of electric power charged into the battery 52 assuming that the speed position is changed to the target speed position before the hybrid vehicle V stops, and regeneration is performed until the hybrid vehicle V stops, is calculated (step 3) . In this case, as the second charge amount CH2, the amount of electric power to be charged into the battery 52 when regeneration by the motor 4 is performed from when the calculated speed change duration TIM has elapsed to when the hybrid vehicle V stops, in a state of the speed position having been changed to the target speed position, is calculated. Therefore, the second charge amount CH2, which is the charge amount in the case where the speed position has been changed, can be accurately predicted according to a speed changing transmission interruption (interruption of transmission of the motive power caused by a change in the speed position of the first transmission mechanism 11).

Then, it is determined based on the calculated first and second charge amounts CH1 and CH2 whether to hold the speed position or to change the same to the target speed position (step 4). As a consequence, if CH1 > CH2 holds, the speed position is held at the present speed position (step 5), whereas if CH1 ≦ CH2 holds, the speed position is changed to the target speed position (step 6) . From the above, it is possible to obtain a larger charge amount, which in turn makes it possible to improve fuel economy of the hybrid vehicle V.

Further, during the deceleration regeneration mode and at the same time during the change of the speed position to the target speed position, the operation of the brake B is controlled in order to decelerate the hybrid vehicle V, and hence it is possible to properly decelerate the hybrid vehicle V such that no shock is caused. Furthermore, during the deceleration regeneration mode, it is determined whether or not the brake B can be operated, and when it is determined that the brake B can be operated, the change of the speed position to the target speed position is started. This makes it possible to positively obtain the above-described advantageous effect that it is possible to properly decelerate the hybrid vehicle V such that no shock is caused.

Further, during deceleration of the hybrid vehicle V, it is determined whether or not one of the first condition that the state of charge SOC is not smaller than the upper limit value and the second condition that the battery temperature TB is not lower than the predetermined temperature is satisfied, and if it is determined that one of the first and second conditions is satisfied, regeneration by the motor 4 is inhibited. This makes it possible to prevent the battery 52 from being overheated. Furthermore, during inhibition of the regeneration, the operation of the brake B is controlled in order to decelerate the hybrid vehicle V, so that it is possible to properly decelerate the hybrid vehicle V such that no shock is caused.

Further, a traveling situation of the hybrid vehicle V is predicted based on data indicative of information on a road on which the hybrid vehicle V is traveling and neighborhood roads, and the travel mode of the hybrid vehicle V is selected according to the predicted traveling situation of the hybrid vehicle V. This makes it possible to select a travel mode suitable for the traveling situation of the hybrid vehicle V. For example, e.g. when the hybrid vehicle V is predicted to travel downhill, it is expected that the charge amount of the battery 52 will be increased during downhill traveling by the above-described deceleration regeneration mode, and hence the ENG travel mode is selected, whereas when the hybrid vehicle V is predicted to travel uphill, it is expected that the assist travel mode will be selected during uphill traveling, and hence to charge the battery 52 in advance, the charge travel mode can be selected.

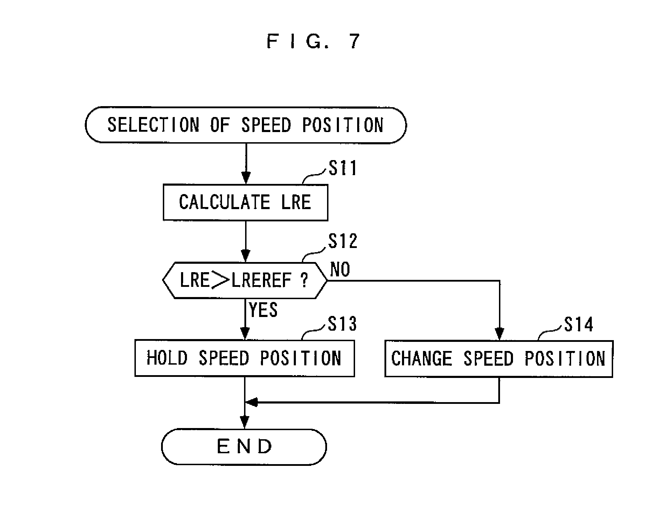

Further, FIG. 7 shows another example of the process for selecting a speed position of the first transmission mechanism during the deceleration regeneration mode. This process is distinguished from the process shown in FIG. 3 mainly in that the determination of whether to hold the speed position or to change the same to the target speed position is performed based on lost regenerative electric energy LRE. The lost regenerative electric energy LRE is electric energy which is incapable of being regenerated due to interruption of transmission of motive power in the first transmission mechanism 11, caused by a change in the speed position, assuming that during the deceleration regeneration mode, the speed position is changed to the above-described target speed position, and regeneration by the motor 4 is performed.

First, in a step 11 in FIG. 7, the lost regenerative electric energy LRE is calculated by searching a predetermined map (not shown) according to the brake pedal stepping force BP and the vehicle speed VP. Next, it is determined whether or not the calculated lost regenerative electric energy LRE is larger than a predetermined value LREREF (step 12). If the answer to this question is affirmative (YES), i.e. if the lost regenerative electric energy LRE > the predetermined value LREREF holds, the speed position is inhibited from being changed to the target speed position, and is held at the present speed position (step 13), followed by terminating the present process.

On the other hand, if the answer to the question of the step 13 is negative (NO), i.e. if the lost regenerative electric energy LRE ≦ the predetermined value LREREF holds, the speed position is changed to the target speed position (step 14), followed by terminating the present process.

As described above, according to the present process, assuming that during the deceleration regeneration mode, the speed position of the first transmission mechanism 11 is changed, and regeneration by the motor 4 is performed, the lost regenerative electric energy LRE is predicted which is electric energy incapable of being regenerated due to interruption of motive power transmission in the first transmission mechanism 11, caused by a change in the speed position. Further, during the deceleration regeneration mode, when the predicted lost regenerative electric energy LRE is larger than the predetermined value LREREF, the speed position is inhibited from being changed to the target speed position. With this operation, when the lost regenerative electric energy LRE, which is electric energy incapable of being regenerated due to speed changing transmission interruption, is relatively large, it is possible to inhibit the speed position from being changed to the target speed position, and perform regeneration in the state of the speed position being held, so that it is possible to obtain a larger charge amount, which in turn makes it possible to improve fuel economy of the hybrid vehicle V.

Further, during the deceleration regeneration mode, electric power generated by the motor 4 according to the brake pedal stepping force BP is controlled to thereby control the braking force generated by regeneration by the motor 4. Furthermore, since the brake pedal stepping force BP and the vehicle speed VP are used as parameters for predicting the lost regenerative electric energy LRE, it is possible to properly perform this prediction.

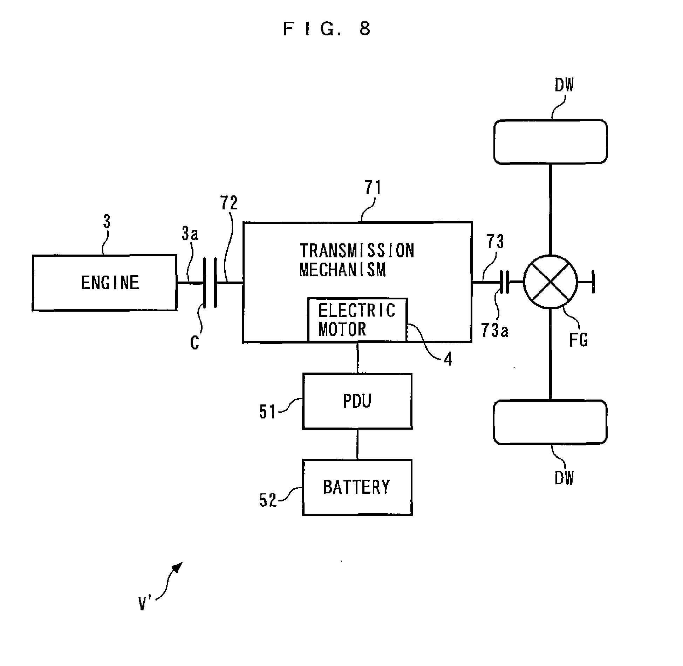

The present invention can be applied to a hybrid vehicle V' shown in FIG. 8. In the figure, the same component elements as those of the hybrid vehicle V shown in FIG. 1 are denoted by the same reference numerals. The hybrid vehicle V' shown in FIG. 8 is distinguished from the hybrid vehicle V mainly in that it is provided with a transmission mechanism 71 in place of the first and second transmission mechanisms 11 and 31.

The transmission mechanism 71 is a stepped automatic transmission, and includes an input shaft 72 and an output shaft 73. The input shaft 72 is connected to the crankshaft 3a via a clutch C, and the rotor 4b of the motor 4 is integrally mounted on the input shaft 72. The clutch C is a dry multiple-disc clutch, similarly to the first and second clutches C1 and C2.

A gear 73a is integrally mounted on the output shaft 73. The gear 73a is in mesh with the gear of the above-described final reduction gear box FG. The output shaft 73 is connected to the drive wheels DW and DW via the gear 73a and the final reduction gear box FG. In the transmission mechanism 71 constructed as above, the engine motive power and the motor motive power are input to the input shaft 72, and the input motive power is transmitted to the drive wheels DW and DW, while having the speed thereof changed in one of a plurality of speed positions (e.g. the first to seventh speed positions) . Further, the operation of the transmission mechanism 71 is controlled by the ECU 2.

Also when the control system according to the present invention is applied to the hybrid vehicle V' , the setting of the speed position and the selection of the travel mode in the deceleration regeneration mode are performed similarly to the case of the above-described control system 1, and hence detailed description thereof is omitted. As a consequence, the same advantageous effects as provided by the above-described embodiment can be obtained.

Note that although the transmission mechanism 71 is configured to transmit both the engine motive power and the motor motive power to the drive wheels DW in a state having the speed thereof changed, a transmission mechanism which transmits the engine motive power to the drive wheels DW in a state having the speed thereof changed, and a transmission mechanism which transmits the motor motive power to the drive wheels DW in a state having the speed thereof changed may be provided separately from each other. Further, in the present case, the control system can also be applied to a hybrid vehicle including the motor 4 alone as a motive power source. In this case, the motor motive power is transmitted to the drive wheels DW in a state having the speed thereof changed by the transmission mechanism 71.

Note that although in the present embodiment, the change of the speed position to the target speed position is started when it is determined that the brake B can be operated, in place of or in combination with this, the change of the speed position may be started at a timing at which the brake pedal stepping force BP is reduced by a predetermined value or more. This makes it possible to start the change of the speed position to the target speed position at a timing at which a driver' s deceleration demand is reduced, so that it is possible to change the speed position without giving a large sense of discomfort to the driver. Further, although in the above-described embodiment, the first and second charge amounts CH1 and CH2 are each calculated as a predicted value of the amount of charge to be stored over time until the hybrid vehicle V stops, they may be each calculated as a predicted value of the amount of charge to be stored over time until a predetermined regeneration time period elapses. In this case, the regeneration time period is set as a time period from the present time point to a time when the vehicle speed VP is reduced to a predetermined speed.

Further, although in the present embodiment, the setting (holding or changing) of the speed position is based on the first and second charge amounts CH1 and CH2 is executed during the deceleration regeneration mode, it may be executed during the charge travel mode. In this case, an amount of electric power, which is to be charged into the battery 52 during charging travel assuming that regeneration by the motor 4 is performed for a predetermined regeneration time period in the state of the speed position being held, is calculated as the first charge amount. Further, an amount of electric power, which is to be charged into the battery 52 during charging travel when regeneration by the motor 4 is performed for a time period corresponding to a difference between the regeneration time period and the speed change duration TIM in a state where the speed position has been changed to the target speed position, is calculated as the second charge amount. Note that the regeneration time period is set to a proper time period.

Further, although in the present embodiment, the target speed position is set according to the vehicle speed VP and the drive wheel torque TDW, basically, as described above, as the rotational speed of the motor 4 is higher, the power generation efficiency of the motor 4 is higher and hence a larger charge amount can be obtained, so that the target speed position may be set to a desired speed position which is a lower speed side than the present speed position or to a first speed position which is the lowest speed position. Furthermore, although in the present embodiment, the brake pedal stepping force BP, which is a force with which the brake pedal is stepped on, is detected as the operation amount of the brake pedal, the operation amount itself of the brake pedal may be detected. Further, although in the present embodiment, the speed change duration TIM is calculated using a map, it may be calculated using a predetermined mathematical expression.

Furthermore, although in the present embodiment, the first and second charge amounts CH1 and CH2 are calculated using the conversion efficiency map (FIG. 4) on which the motive power transmission efficiency of the first transmission mechanism 11, the power generation efficiency of the motor 4, and the charging efficiency of the battery 52 are reflected, the first and second charge amounts CH1 and CH2 may be calculated, e.g. as follows: Without using the conversion efficiency map, the above-mentioned motive power transmission efficiency, power generation efficiency, and charging efficiency may be calculated in real time, and the first and second charge amounts CH1 and CH2 may be calculated according to the calculated motive power transmission efficiency, power generation efficiency, and charging efficiency, and the motor-transmitted torque mentioned hereinabove. In this case, the motive power transmission efficiency is calculated e.g. by searching a predetermined map (not shown) according to the vehicle speed VP and the drive wheel torque TDW, and the power generation efficiency is calculated e.g. by searching a predetermined map (not shown) according to the motor rotational speed NMot determined by the vehicle speed VP and a speed position of the first transmission mechanism 11 and the like. Further, the charging efficiency is calculated e.g. by searching a predetermined map (not shown) according to the battery temperature TB. Further, to calculate the motive power transmission efficiency, the power generation efficiency, and the charging efficiency, predetermined mathematical expressions may be used instead of using the maps.

Next, control of the hybrid vehicle V according to a second embodiment of the present invention will be described with reference to FIGS. 9 to 11. This control executes charging-preferred travel according to the state of charge SOC of the battery 52, and selects speed positions of the first and second transmission mechanisms 11 and 31.

FIG. 9 shows a main routine of the control executed whenever a predetermined time period elapses. In this process, first, in a step 101, it is determined whether or not the state of charge SOC of the battery 52 is lower than a predetermined first lower limit value SOCL1, which is so low as to require the battery 52 to be charged. If the answer to this question is negative (NO), in a step 102, normal travel control is executed, followed by terminating the present process.

In this normal travel control, basically, any one of the ENG travel mode, the EV travel mode, and the assist travel mode is selected as a travel mode according to the vehicle speed VP, the required torque TRQ, and the state of charge SOC, and in the selected travel mode, a speed position highest in total efficiency, referred to hereinafter, is selected.

On the other hand, if the answer to the question of the step 101 is affirmative (YES), i.e. if SOC < SOCL1 holds, in a step 103, the engine 3 is brought into operation, and then the process proceeds to a step 104. Specifically, if the travel mode before that time is the EV travel mode and the engine 3 is at a stop, the engine 3 is forcibly started. On the other hand, when the engine 3 is in operation, the engine 3 is inhibited from being stopped and is held in operation.

In the step 104, charging-preferred travel control is executed. FIG. 10 shows a subroutine of the control. In this process, first, in a step 111, optimum fuel economy control is executed. In the optimum fuel economy control, BSFC bottom torque, which makes it possible to obtain the smallest fuel consumption ratio of the engine 3, is according to the engine speed NE, and the engine torque is controlled to the calculated BSFC bottom torque.

Next, in a step 112, insufficient electric power SOCsht is calculated by subtracting a state of charge SOC at the time from a predetermined target state of charge SOCM. Then, in a step 113, required electric power EPreq per unit time, which is required to restore the state of charge SOC of the battery 52 to the target state of charge SOCM in a predetermined time period Tref, is calculated by dividing the calculated insufficient electric power SOCsht by the predetermined time period Tref.

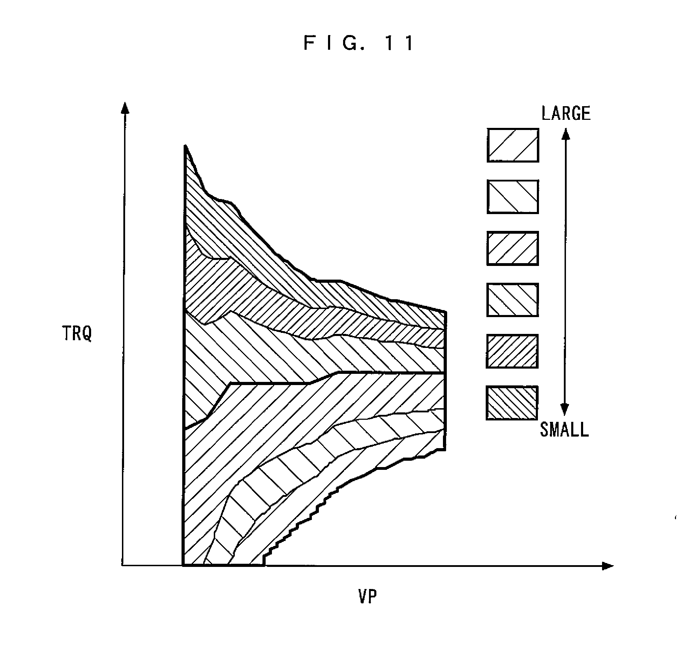

Next, in a step 114, a charge amount EP of the battery 52 is calculated according to the vehicle speed VP and the required torque TRQ. This calculation is performed using a charge amount map as shown in FIG. 11, for each of combinations of the speed positions of the first transmission mechanism 11 and the speed positions of the second transmission mechanism 31 (hereinafter referred to as the "speed-changing patterns") . This charge amount map is an example for a case where a speed-changing pattern is used in which the speed position of the engine 3 and that of the motor 4 are both third speed positions, and a charge amount EP per unit time of the battery 52, determined in advance by experiment in association with the vehicle speed VP and the required torque TRQ, is set in a map. Note that in actuality, the charge amount map is formed by a plurality of maps associated with all the speed-changing patterns, and charge amounts EP are calculated using these maps for respective speed-changing patterns.

Next, in a step 115, speed-changing patterns satisfying a condition that the calculated charge amount EP is not smaller than the required electric power EPreq are preliminarily selected from the above-described speed-changing patterns.

Then, in a step 116, a predicted efficiency Ehat is calculated for each speed-changing pattern preliminarily selected. The predicted efficiency Ehat corresponds to efficiency predicted to be exhibited when electric power charged in the battery 52 is used for conversion to motive power by the motor 4 in the future, and is calculated according to the vehicle speed VP, the required torque TRQ, the state of charge SOC, and so forth.

Next, in a step 117, a total efficiency TE is calculated for each speed-changing pattern preliminarily selected. The total efficiency TE corresponds to a total efficiency at which fuel as an energy source of the hybrid vehicle V is finally used as traveling energy. The total efficiency TE includes the efficiency of the engine 3, the efficiency of the motor 4, the charging efficiency of the battery 52, and the efficiencies of the first and second transmission mechanisms 11 and 31. These efficiencies are calculated according to the vehicle speed VP, the required torque TRQ, and so forth. The total efficiency TE is calculated using the calculated efficiencies, and the predicted efficiency Ehat calculated in the step 16.

Next, in a step 118, a speed-changing pattern which is largest in the calculated total efficiency TE is finally selected from the speed-changing patterns preliminarily selected, followed by terminating the present process.

Traveling in the charge travel mode is executed using the speed-changing pattern selected as above, and the difference between the BSFC bottom torque and the required torque TRQ is used for regeneration by the motor 4 to charge electric power generated by regeneration into the battery 52. This makes it possible to restore the state of charge SOC of the battery 52 to the target state of charge SOCM within the predetermined time period Tref, and obtain the largest total efficiency TE of all satisfying the condition.

Note that during the above-described charging-preferred travel, when the state of charge SOC further lowers, and becomes lower than a predetermined second lower limit value SOCL2, which is lower than the first lower limit value SOCL1, in a state where the second or fourth speed position of the second transmission mechanism 31 is selected as the speed position for the engine motive power, there is executed the following control: First, the speed position of the second transmission mechanism 31 for changing the speed of the engine motive power is shifted to a speed position higher by one stage (e.g. from the fourth speed position to the sixth speed position), and the charge amount EP is searched for on a speed-changing pattern-by-speed-changing pattern basis, using the above-described charge amount map associated with each combination of the shifted speed position and each of the plurality of speed positions of the first transmission mechanism 11 on the side of the motor 4 (speed-changing pattern), according to the vehicle speed VP and the required torque TRQ. Then, a speed-changing pattern which is largest in the charge amount EP found by search is selected from the speed-changing patterns. This makes it possible to promptly restore the state of charge SOC of the battery 52 having become lower than the second lower limit value SOCL2, early.

Further, the ECU 2 predicts a traveling situation of the hybrid vehicle V based on information on a road on which the hybrid vehicle V is traveling and neighborhood roads, stored in the above-mentioned car navigation system 68, and then selects a speed-changing pattern according to the predicted traveling situation of the hybrid vehicle V. Specifically, when the hybrid vehicle V is predicted to travel downhill, the ECU 2 selects a speed-changing pattern which is largest in engine torque, whereas when the hybrid vehicle V is predicted to travel uphill, the ECU 2 selects a speed-changing pattern which is largest in the charge amount EP by consulting the charge amount map shown in FIG. 11.

Further, when an amount ΔAP of change in the accelerator pedal opening becomes larger than a predetermined value during the above-described charging-preferred travel, a speed-changing pattern which is largest in engine torque is selected.

As described above, according to the present embodiment, the engine torque is controlled such that it becomes equal to the BSFC bottom torque, in the state where the state of charge SOC of the battery 52 is lower than the first lower limit value SOCL1, so that it is possible to improve the fuel economy of the engine 3.

Further, since the difference between the BSFC bottom torque and the required torque TRQ is used for regeneration by the motor 4, and electric power generated by regeneration is charged into the battery 52, it is possible to positively restore the state of charge SOC of the battery 52 having become lower than the first lower limit value SOCL1.

Further, when the charging-preferred travel is executed, a plurality of speed-changing patterns, which can restore the state of charge SOC of the battery 52 having become lower than the first lower limit value SOCL1, to the target state of charge SOCM within the predetermined time period Tref, are preliminarily selected, and a speed-changing pattern which is largest in the total efficiency TE of the hybrid vehicle V is finally selected from the speed-changing patterns preliminarily selected, and therefore it is possible to restore the state of charge SOC of the battery 52 to the target state of charge SOCM within the predetermined time period Tref and obtain the largest total efficiency TE of all satisfying the condition.

Furthermore, during the charging-preferred travel, when the state of charge SOC has further lowered to become lower than the predetermined second lower limit value SOCL2, which is lower than the lower limit value SOCL1, in the state where the second or fourth speed position of the second transmission mechanism 31 is selected as the speed position for the engine motive power, the speed position of the second transmission mechanism 31 for changing the speed of the engine motive power is shifted to a speed position higher by one stage, and a speed position at which the largest charge amount EP can be obtained is selected for the shifted speed position, from the speed positions of the first transmission mechanism 11 on the side of the motor 4, so that it is possible to restore the state of charge SOC of the battery 52 having become lower than the second lower limit value SOCL2, early.

Further, a speed-changing pattern is selected according to a traveling situation of the hybrid vehicle V predicted by the car navigation system 66, and hence when the hybrid vehicle V is predicted to travel downhill, a speed-changing pattern which is largest in engine torque can be selected, whereas when the hybrid vehicle V is predicted to travel uphill, a speed-changing pattern which is largest in the charge amount EP can be selected.

Further, when the amount ΔAP of change in the accelerator pedal opening becomes larger than the predetermined value during the above-described charging-preferred travel, the charging-preferred travel is terminated, and the aforementioned motive power-preferred travel is started, so that it is possible to transmit torque larger than torque corresponding to an acceleration demand by the driver, to the drive wheels DW, whereby it is possible to improve drivability.

Furthermore, when the state of charge SOC becomes lower than the first lower limit value SOCL1, in a case if the travel mode before that time is the EV travel mode and the engine 3 is at a stop, the engine 3 is forcibly started, whereas if the engine 3 is in operation, the engine 3 is inhibited from being stopped and is held in operation. Therefore, it is possible to restore the state of charge SOC of the battery 52 having become lower than the first lower limit value SOCL1.

The present invention can also be applied to the above-described hybrid vehicle V' shown in FIG. 8. Also when the control system according to the present invention is applied to the hybrid vehicle V', the selection of the travel mode, as well the selection of the speed position, and the selection of the travel mode are performed similarly to the case of the above-described control system 1, and hence detailed description thereof is omitted. As a consequence, the same advantageous effects as provided by the above-described embodiment can be obtained.

Note that although in the present embodiment, calculation of the total efficiency TE is performed according to the efficiency of the engine 3, the efficiency of the motor 4, the charging efficiency of the battery 52, and the efficiencies of the first and second transmission mechanisms 11 and 31, the calculation may be performed according to other suitable efficiencies in place of or in addition to these.

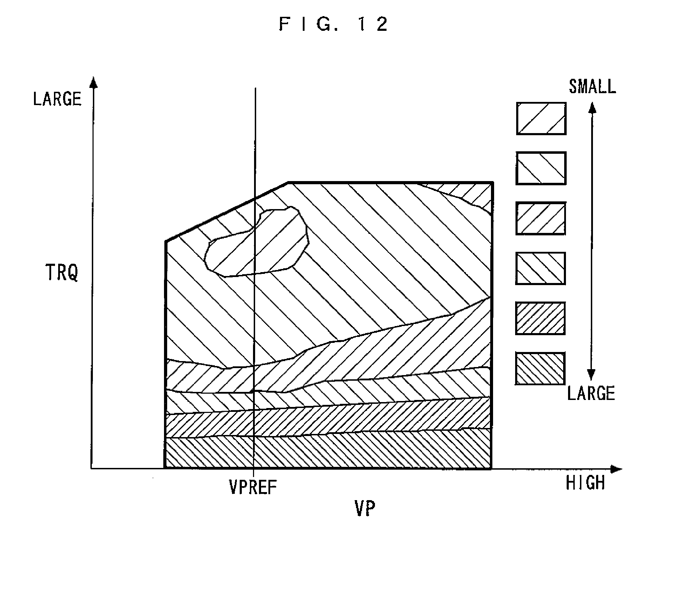

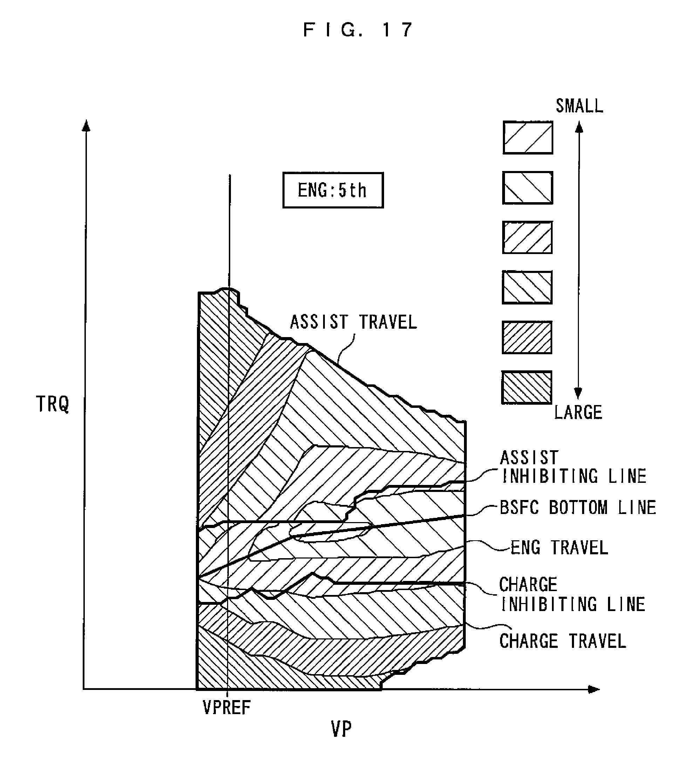

Next, control of the hybrid vehicle V according to a third embodiment of the present invention will be described with reference to FIGS. 12 to 19. This control selects the above-described ENG travel mode, assist travel mode or charge travel mode, and selects speed positions in the respective travel modes.

First, a description will be given of a total fuel consumption ratio TSFC for use in these selections. The total fuel consumption ratio TSFC refers to a ratio of a fuel amount to final traveling energy, determined assuming that fuel as an energy source for the hybrid vehicle V is finally converted to the traveling energy of the hybrid vehicle V. Therefore, as the value of the total fuel consumption ratio TSFC is smaller, it indicates that the fuel economy of the hybrid vehicle V is more excellent.

In the ENG travel mode, the total fuel consumption ratio TSFC is calculated using the amount of fuel supplied to the engine 3 for traveling of the hybrid vehicle V, the efficiency of the engine 3, and the efficiencies of the first and second transmission mechanisms 11 and 31. Hereafter, these three parameters are generically referred to as the "engine driving parameters".

Further, in the assist travel mode, the total fuel consumption ratio TSFC is calculated using not only the above-mentioned engine driving parameters but also the amount of fuel supplied to the engine 3 in the past in order to charge the battery 52 with electric power for assist traveling, the discharging efficiency of the battery 52, the driving efficiency of the motor 4, and the efficiencies of the first and second transmission mechanisms 11 and 31.

Further, in the charge travel mode, the total fuel consumption ratio TSFC is calculated using not only the engine driving parameters but also the amount of fuel supplied to the engine 3 in order to generate electric power for charging the battery 52 by the motor 4, the efficiency of the engine 3, the efficiencies of the first and second transmission mechanisms 11 and 31, the power generation efficiency of the motor 4, the charging efficiency of the battery 52, and the predicted efficiency, which is an efficiency predicted to be exhibited when the amount of electric power charged in the battery 52 is used for traveling of the hybrid vehicle V in the future.

The total fuel consumption ratio TSFC calculated as above reflects not only the fuel consumption ratio of the engine 3 but also the efficiencies of the first and second transmission mechanisms 11 and 31, and in the assist travel mode or the charge travel mode, it further reflects the driving efficiency and power generation efficiency of the motor 4, the discharging efficiency and charging efficiency of the battery 52, and so forth.

Next, the relationship between the total fuel consumption ratios TSFC of the hybrid vehicle V obtained in the above-described ENG travel mode, assist travel mode and charge travel mode will be described with reference to FIGS. 12 to 14.

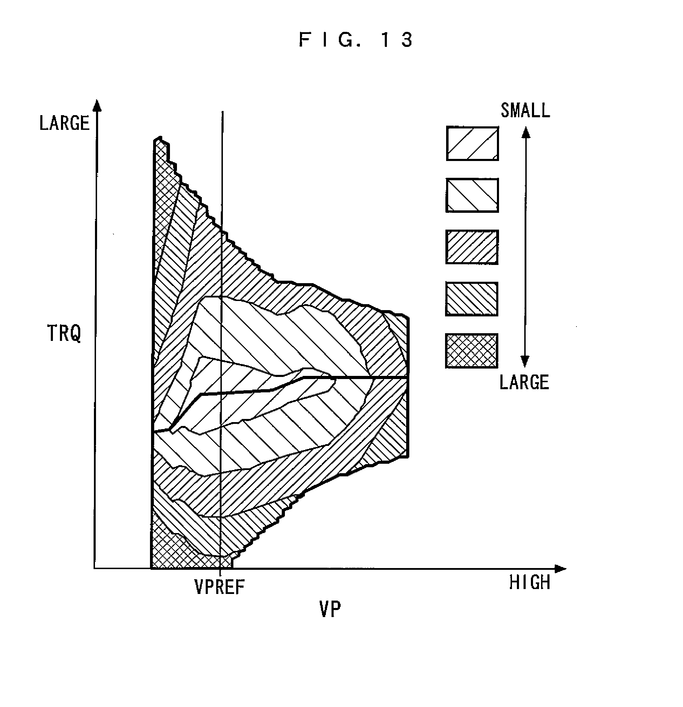

A map in FIG. 12 defines the total fuel consumption ratio TSFC obtained in the ENG travel mode in association with the vehicle speed VP (horizontal axis) and the required torque TRQ (vertical axis). A map in FIG. 13 defines the total fuel consumption ratio TSFC obtained in the assist travel mode or the charge travel mode when the engine 3 is operated at the BSFC bottom torque, in association with the vehicle speed VP and the required torque TRQ. The BSFC bottom torque is a torque which makes it possible to obtain the minimum fuel consumption ratio of the engine 3 with respect to the engine speed NE determined by the speed position of the engine 3 and the vehicle speed VP.

Further, FIG. 14 illustrates, together, the total fuel consumption ratios TSFC in the three travel modes , which are obtained by cutting the FIG. 12 and FIG. 13 maps along the required torque TRQ at the same vehicle speed VPREF. Note that for convenience of illustration, in FIG. 14, as the total fuel consumption ratio TSFC is smaller, it is indicated closer to the top side of the figure, and therefore as the point is closer to the top side, it indicates that the fuel economy of the hybrid vehicle V is more excellent.

As can be understood from these figures, in the ENG travel mode, the total fuel consumption ratio TSFC becomes smallest when the engine torque is equal to the BSFC bottom torque. Further, in a torque range in the vicinity of the BSFC bottom torque including the same, the total fuel consumption ratio TSFC in the ENG travel mode becomes smaller than the total fuel consumption ratio TSFC in the assist travel mode or the charge travel mode (hatched area in the figure) . This is because as described hereinabove, in this torque range, the driving efficiency or power generation efficiency of the motor 4 is lower since the difference between the required torque and the BSFC bottom torque is smaller and hence load on the motor 4 is smaller.

From the above, it is understood that in the torque range including the BSFC bottom torque, it is possible to obtain a smaller total fuel consumption ratio TSFC by executing engine travel performed by displacing the engine torque from the BSFC bottom torque than by executing assist travel or charge travel, and improve the fuel economy of the hybrid vehicle V.

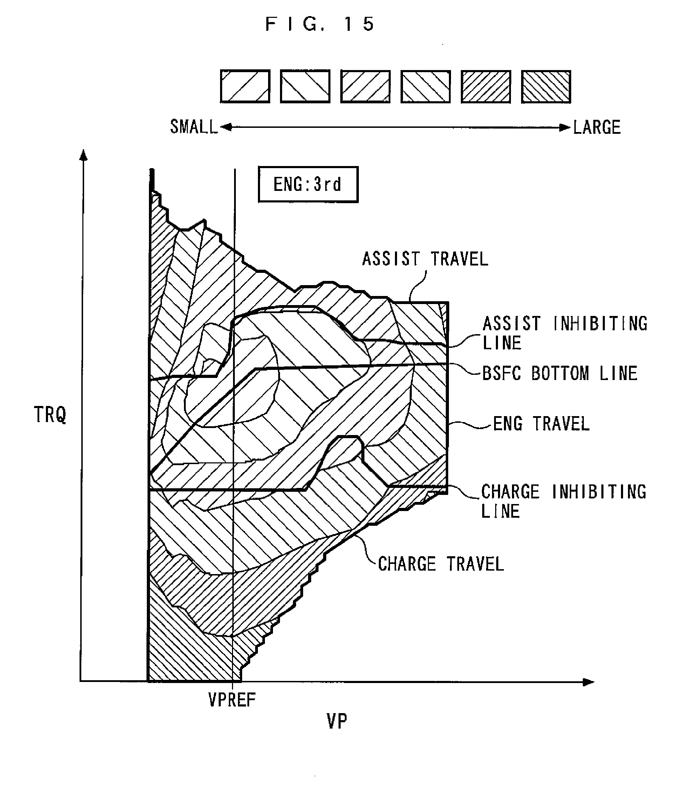

FIGS. 15 to 17 each show a total fuel consumption ratio map for use in selection of the travel mode and the speed position. In actuality, such a total fuel consumption ratio map is set for each of the speed positions (first to seventh speed positions) for changing the speed of the engine motive power, and is stored in the ECU 2. FIGS. 15 to 17 show respective examples of the third to fifth speed positions of those.

As shown in these figures, similarly to FIGS. 12 and 13, each total fuel consumption ratio map defines the total fuel consumption ratio TSFC in association with the vehicle speed VP (horizontal axis) and the required torque TRQ (vertical axis) . In each total fuel consumption ratio map, there are set an ENG (engine) travel region, an assist travel region which is larger in the required torque TRQ than the ENG travel region, and a charge travel region which is smaller in the required torque TRQ than the ENG travel region.

The ENG travel region is a region in which a smallest total fuel consumption ratio TSFC can be obtained in each speed position for the engine motive power when in the ENG travel mode out of the three travel modes. The ENG travel region includes a BSFC bottom line connecting the values of the BSFC bottom torque according to the relationship described with reference to FIG. 14. This BSFC bottom line extends in a manner crossing the ENG travel region.

Similarly, the assist travel region is a region in which the smallest total fuel consumption ratio TSFC can be obtained when in the assist travel mode out of the three travel modes. A boundary between the assist travel region and the ENG travel region forms an assist inhibiting line. As is apparent from the above definition, this assist inhibiting line connects points where the total fuel consumption ratio TSFC obtained in the ENG travel mode and the total fuel consumption ratio TSFC obtained in the assist travel mode match each other.

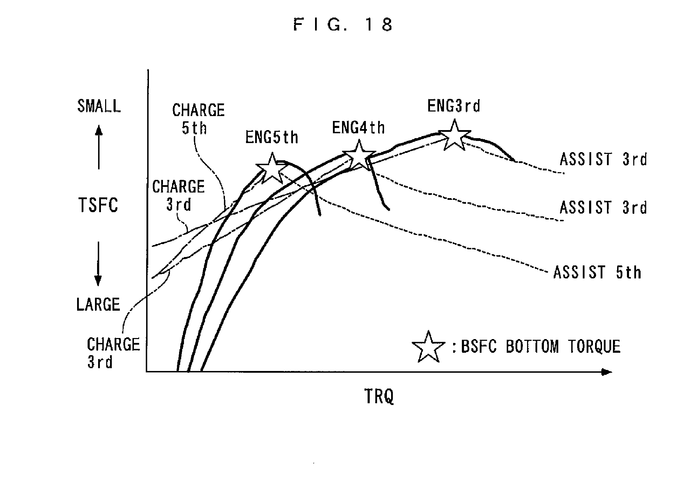

The charge travel region is a region in which the smallest total fuel consumption ratio TSFC can be obtained when in the charge travel mode out of the three travel modes. A boundary between the charge travel region and the ENG travel region forms a charge inhibiting line. As is apparent from the above definition, this charge inhibiting line connects points where the total fuel consumption ratio TSFC obtained in the ENG travel mode and the total fuel consumption ratio TSFC obtained in the charge travel mode match each other. To show the above-described relationship, FIG. 18 illustrates, together, the total fuel consumption ratios TSFC in the three travel modes, which are obtained by cutting the maps in FIGS. 15 to 17 along the required torque TRQ at the same vehicle speed VPREF.

From the above-described relationship, in the total fuel consumption ratio maps associated with the speed positions for changing the speed of the engine motive power, when a combination of the vehicle speed VP and the required torque TRQ belongs to the ENG travel region, the ENG travel mode is selected, when the combination belongs to the assist travel region, the assist travel mode is selected, and when the combination belongs to the charge travel region, the charge travel mode is selected, whereby it is possible to obtain the smallest total fuel consumption ratio TSFC in each of the speed positions for the engine motive power.

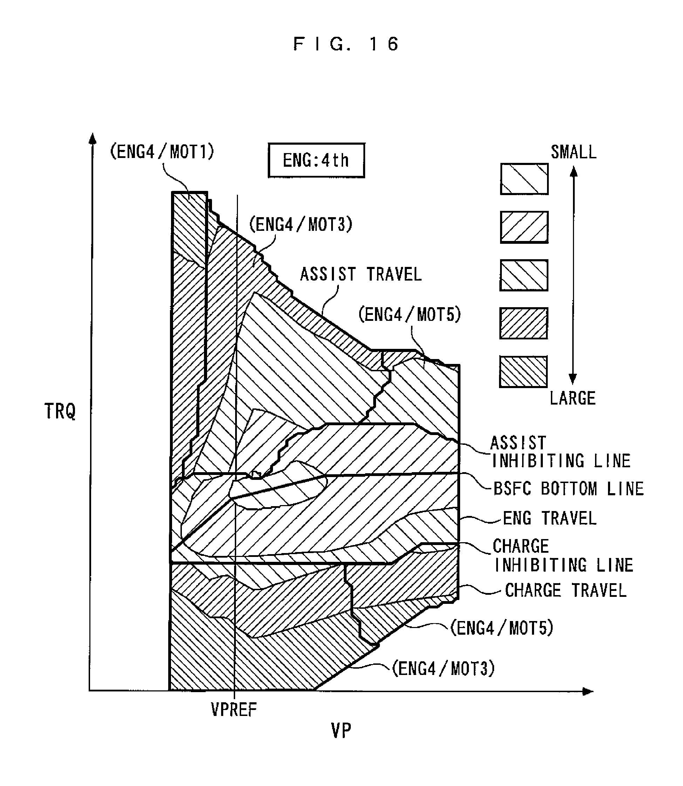

Further, when the speed position for the engine motive power is an odd-number speed position set by the second transmission mechanism 31, any of combinations of this speed position for the engine motive power and speed positions for changing the speed of the motor motive power set by the first transmission mechanism 11 (speed-changing patterns) can be selected as desired, and the total fuel consumption ratio TSFC varies with the speed-changing pattern. For this reason, as shown in FIG. 16, in a total fuel consumption ratio map associated with the odd-number speed position for the engine motive power, the assist travel region and the charge travel region are divided into a plurality of regions in association with each speed-changing pattern in which the smallest total fuel consumption ratio TSFC can be obtained. Note that in the figure, for example, "ENG4/MOT3" indicates a speed-changing pattern in which the speed position for the engine motive power is the fourth speed position, and the speed position for the motor motive power is the third speed position.

Therefore, when the speed position for the engine motive power is an odd-number speed position, a region to which the combination of the vehicle speed VP and the required torque TRQ belongs is determined by searching the total fuel consumption ratio map configured as above, according to the vehicle speed VP and the required torque TRQ, whereby it is possible to select a travel mode which makes it possible to obtain the smallest total fuel consumption ratio, and a speed-changing pattern in the case where the travel mode is the assist travel mode or the charge travel mode.

FIG. 19 shows a travel mode selection process for selecting a travel mode using the above-described total fuel consumption ratio map, according to the speed position for the engine motive power. This process is executed by the ECU 2 whenever a predetermined time period elapses.

In this process, first, in a step 201, an assist-inhibiting determination value TASTNG is calculated according to a speed position set at the time for the engine motive power and the vehicle speed VP. Specifically, a total fuel consumption ratio map associated with this speed position is searched to thereby read out a value of the required torque TRQ on the assist inhibiting line, which corresponds to the vehicle speed VP and set the value as the assist-inhibiting determination value TASTNG.

Next, a charge-inhibiting determination value TCHGNG is calculated according to the speed position for the engine motive power and the vehicle speed VP (step 202). Specifically, the total fuel consumption ratio map is searched to read a value of the required torque TRQ on the charge inhibiting line, which corresponds ○ the vehicle speed VP and set the value as the charge-inhibiting determination value TCHGNG.

Then, it is determined whether or not the required torque TRQ is larger than the assist-inhibiting determination value TASTNG (step 203). If the answer to this question is affirmative (YES), i.e. if the required torque TRQ is above the assist inhibiting line, which means that the combination of the vehicle speed VP and the required torque TRQ belongs to the assist travel region, the assist travel mode is selected as the travel mode (step 204), followed by terminating the present process.

If the answer to the question of the above-described step 203 is negative (NO), it is determined whether or not the required torque TRQ is smaller than the charge-inhibiting determination value TCHGNG (step 205). If the answer to this question is negative (NO), i.e. if the required torque TRQ is not above the assist inhibiting line and also is not below the charge inhibiting line, which means that the combination of the vehicle speed VP and the required torque TRQ belongs to the ENG travel region, the ENG travel mode is selected as the travel mode (step 206) , followed by terminating the present process.

Further, if the answer to the question of the above-described step 205 is affirmative (YES), i.e. if the required torque TRQ is below the charge inhibiting line, which means that the combination of the vehicle speed VP and the required torque TRQ belongs to the charge travel region, the charge travel mode is selected as the travel mode (step 207), followed by terminating the present process.

By performing the above-described process, it is possible to properly select the travel mode in which the smallest total fuel consumption ratio TSFC can be obtained, according to the speed position for the engine motive power, the vehicle speed VP, and the required torque TRQ.

Note that although the above-described process selects a travel mode according to a speed position already determined for changing the speed of the engine motive power, it is also possible to simultaneously select a travel mode and a speed position for the engine motive power according to the vehicle speed VP and the required torque TRQ.

Specifically, in this case, first, by searching all the total fuel consumption ratio maps according to the vehicle speed VP and the required torque TRQ, total fuel consumption ratios TSFC in the respective speed positions for changing the speed of the engine motive power are calculated. Then, the calculated total fuel consumption ratios TSFC are compared with each other, to thereby identify a smallest total fuel consumption ratio TSFC, a total fuel consumption ratio map including the smallest total fuel consumption ratio TSFC, and a travel region. Then, a travel mode associated with the identified travel region is selected, and a speed position for the engine motive power, which is associated with the identified total fuel consumption ratio map, is selected. Further, when the speed position for the engine motive power is an odd-number speed position, a speed-changing pattern is selected along therewith.

From the above, a travel mode and a speed position, which make it possible to obtain a smallest total fuel consumption ratio TSFC, can be properly selected according to the vehicle speed VP and the required torque TRQ.

Further, although the above-described example uses a plurality of total fuel consumption ratio maps set in association with respective speed positions for changing the speed of the engine motive power, one total fuel consumption ratio map formed by integrating these total fuel consumption ratio maps may be used. Specifically, in this case, all the above-mentioned total fuel consumption ratio maps are superimposed one upon another such that portions each indicating a smallest total fuel consumption ratio TSFC remain in the map, to thereby set one total fuel consumption ratio map in advance. Then, the total fuel consumption ratio map thus integrated is searched according to the vehicle speed VP and the required torque TRQ to identify a region to which the combination of the vehicle speed VP and the required torque TRQ belongs, whereby it is possible to easily and properly select a travel mode and a speed position, which make it possible to obtain the smallest total fuel consumption ratio TSFC, from the one total fuel consumption ratio map.

Further, when the detected state of charge SOC of the battery 52 is not larger than a predetermined value, to restore the state of charge SOC, the ECU 2 controls the operation of the motor 4 in the charge travel mode such that the amount of regeneration by the motor 4 is increased. In this case, the engine torque is increased in a manner compensating for an increase in the amount of regeneration.

Furthermore, during the assist travel mode, when the detected battery temperature TB becomes not lower than a predetermined temperature, the output of the motor 4 is limited to thereby limit assisting of the engine 3 by the motor 4. In this case, the engine torque is increased in a manner compensating for an amount of limitation of the assistance.

Further, in the case where the speed position for the engine motive power is an even-number speed position, when the amount of change in the accelerator pedal opening AP is larger than the predetermined value, the assist travel mode, which uses a speed position of the first transmission mechanism 11 lower than the speed position for the engine motive power, as the speed position for the motor motive power, is selected.

Furthermore, the ECU 2 predicts a traveling situation of the hybrid vehicle V based on information on a road on which the hybrid vehicle V is traveling and neighborhood roads, input from the aforementioned car navigation system 68. Then, the ECU 2 selects a speed position according to the predicted traveling situation of the hybrid vehicle V.

As described above, according to the present embodiment, when the required torque TRQ is not above the assist inhibiting line and is also not below the charge inhibiting line and the combination of the vehicle speed VP and the required torque TRQ belongs to the ENG travel region, the ENG travel mode is selected based on the total fuel consumption ratio maps shown in FIGS. 15 to 17, set and stored in advance in association with respective speed positions for the engine motive power (the steps 203, 205 and 206 in FIG. 19). Therefore, even when the required torque TRQ is close to the BSFC bottom torque of the engine 3, it is possible to obtain a smallest total fuel consumption ratio.

Further, when the required torque TRQ is above the assist inhibiting line and the combination of the vehicle speed VP and the required torque TRQ belongs to the assist travel region, the assist travel mode is selected (the steps 203 and 204), whereas when the required torque TRQ is below the charge inhibiting line and the combination of the vehicle speed VP and the required torque TRQ belongs to the assist travel region, the charge travel mode is selected (the steps 205 and 207). As described above, when the required torque TRQ is far from the BSFC bottom torque of the engine 4, the assist travel mode or the charge travel mode is selected, whereby it is possible to obtain a smallest total fuel consumption ratio. By thus selecting the optimum travel mode according to the relationship between the required torque TRQ and the BSFC bottom torque of the engine 3 to thereby obtain a smallest total fuel consumption ratio, it is possible to improve the fuel economy of the hybrid vehicle V.

Further, in the case where the speed position for the engine motive power is an even-number speed position, when the assist travel mode or the charge travel mode is selected, a region to which the combination of the vehicle speed VP and the required torque TRQ belongs is identified from a plurality of regions formed within the assist travel region or the charge travel region in a manner dividing the same, whereby it is possible to select an optimum speed-changing pattern which makes it possible to obtain the smallest total fuel consumption ratio.

Further, by searching all the total fuel consumption ratio maps according to the vehicle speed VP and the required torque TRQ and identifying a total fuel consumption ratio map indicating the smallest total fuel consumption ratio TSFC, it is possible to easily select an optimum speed position for the engine motive power which makes it possible to obtain the smallest total fuel consumption ratio.

Further, simply by preparing in advance the total fuel consumption ratio maps having the above-described contents and referring to the maps according to the vehicle speed VP and the required torque TRQ, it is possible to easily and properly determine a travel mode and a speed position, which make it possible to obtain the smallest total fuel consumption ratio TSFC without requiring any complicated computation.

Further, to calculate the total fuel consumption ratio TSFC, the above-described parameters are used on a travel mode basis. Therefore, it is possible to accurately calculate the total fuel consumption ratio TSFC, while causing the present, past, and future losses or the like of the engine 3, the first and second transmission mechanisms 11 and 31, the motor 4, and the battery 52 to be reflected thereon, and accordingly it is possible to further improve the fuel economy of the hybrid vehicle V.

Further, when the state of charge SOC of the battery 52 is not larger than the predetermined value, the operation of the motor 4 is controlled in the charge travel mode such that the amount of regeneration by the motor 4 is increased, so that it is possible to positively restore the state of charge SOC of the battery 52 which has been reduced. Further, when the battery temperature TB is not lower than the predetermined temperature, the output of the motor 4 is limited, which makes it possible to suppress a rise in the battery temperature TB. Furthermore, in the case where the speed position for the engine motive power is an even-number speed position, when the amount of change in the accelerator pedal opening AP is larger than the predetermined value, the assist travel mode is selected which uses a speed position of the first transmission mechanism 11 lower than the speed position for the engine motive power, as the speed position for the motor motive power. Therefore, it is possible to transmit torque larger than torque corresponding to an acceleration demand, to the drive wheels DW, whereby it is possible to improve drivability.

Furthermore, since a traveling situation of the hybrid vehicle V is predicted based on data from the car navigation system 68, and a speed position is selected according to the result of the prediction, it is possible to select in advance a speed position suitable for the traveling situation of the hybrid vehicle V. For example, when the hybrid vehicle V is predicted to travel downhill, it is possible to select such a speed position as will make it possible to obtain a high power generation efficiency of the motor 4, whereas when the hybrid vehicle V is predicted to travel uphill, it is possible to select a lower speed position which makes it possible to output larger torque.

The present invention can also be applied to the above-described hybrid vehicle V' shown in FIG. 8. Also when the control system according to the present invention is applied to the hybrid vehicle V', the selection of the travel mode and the selection of the speed position are performed similarly to the case of the above-described control system 1, and hence detailed description thereof is omitted. As a consequence, the same advantageous effects as provided by the above-described embodiment can be obtained.

Note that although in the above-described embodiment, the total fuel consumption ratio TSFC of the hybrid vehicle is used as a parameter for setting the engine travel region, the assist travel region, and the charge travel region, this is not limitative, but the fuel consumption amount of the hybrid vehicle V may be used as the parameter. Further, although in the above-described embodiment, the above-described three travel regions are set and mapped in the total fuel consumption ratio maps, this is not limitative. For example, by storing the assist inhibiting line, which is a boundary between the engine travel region and the assist travel region, and the charge inhibiting line, which is a boundary between the engine travel region and the charge travel region, in the ECU 2, a travel mode may be selected based on results of comparison of the required torque TRQ with these two lines of the assist inhibiting line and the charge inhibiting line.

Further, although the output of the motor 4 is limited when the battery temperature TB is not lower than the predetermined temperature, in place of or in combination with this, the output of the motor 4 may be limited when the temperature of the motor 4 detected e.g. by a sensor is not lower than a predetermined temperature set therefor. This makes it possible to suppress a rise in the temperature of the motor 4.

Further, although in the above-described embodiments, a plurality of speed positions of the respective first and second transmission mechanisms 11 and 31 are set to odd-number speed positions and even-number speed positions, respectively, this is not limitative, but inversely, they may be set to even-number speed positions and odd-number speed positions, respectively. Further, although in the above-described embodiments, as the first and second transmission mechanisms 11 and 31, there are used transmission mechanisms of a type which shares the output shaft 21 for transmitting motive power changed in speed to the drive wheels DW, this is not limitative, but there may be used transmission mechanisms of a type in which output shafts are separately provided. In this case, the first to fourth synchronizing clutches SC1 to SC4 may be provided not on the first input shaft 13 and the second input intermediate shaft 33 but on the output shafts. Furthermore, although in the above-described embodiments, the clutch C and the first and second clutches C1 and C2 are dry multiple-disc clutches, they may be wet multiple-disc clutches or electromagnetic clutches.

Further, although in the above-described embodiments, as the electric motor in the present invention, there is used the motor 4, which is a brushless DC motor, there may be used a suitable electric motor other than this, such as an AC motor, insofar as it is capable of generating electric power. Further, although in the above-described embodiments, the storage battery of the present invention is the battery 52, a suitable storage battery other than this, such as a capacitor, may be used insofar as it is capable of being charged and discharged. Further, although in the above-described embodiments, the engine 3, which is a gasoline engine, is employed as an internal combustion engine in the present invention, a diesel engine or an LPG engine may be employed. Further, it is possible to modify details of the construction of the embodiments as required within the spirit and scope of the present invention.

### [Industrial Applicability]

The present invention is very useful for the hybrid vehicle in properly controlling the state of charge of a storage battery, properly selecting a travel mode, and improving fuel economy.
- V: hybrid vehicle
- V': hybrid vehicle
- 1: control system
- 2: ECU
- 3: engine
- 3a: crankshaft
- 4: motor
- DW: drive wheel
- 11: first transmission mechanism
- 13: first input shaft
- 31: second transmission mechanism
- 32: second input shaft
- C1: first clutch
- C2: second clutch
- B: brake
- 52: battery
- 68: car navigation system
- 71: transmission mechanism
- CH1: first charge amount
- CH2: second charge amount
- TIM: speed change duration
- SOC: state of charge of battery
- TB: battery temperature
- BP: brake pedal stepping force
- VP: vehicle speed
- SOCL1: first lower limit value
- TE: total efficiency
- Tref: predetermined time period
- EPreq: required electric power
- EP: charge amount
- SOCL2: second lower limit value
- TSFC: total fuel consumption ratio of hybrid vehicle
- TRQ: required torque

## Claims

1. A control system for a hybrid vehicle including an electric motor capable of generating electric power as a motive power source, a storage battery capable of supplying and receiving electric power to and from the electric motor, and a transmission mechanism capable of transmitting input motive power to drive wheels in a state in which a speed of the motive power is changed in one of a plurality of speed positions, the control system comprising:
first charge amount-estimating means for estimating a first charge amount, which is an amount of electric power charged into the storage battery when regeneration is performed by the electric motor for a predetermined regeneration time period in a state in which the speed position is held;
second charge amount-estimating means for estimating a second charge amount, which is an amount of electric power charged into the storage battery when the speed position is changed to a target speed position within the regeneration time period and the regeneration by the electric motor is performed until the regeneration time period elapses;
speed change-determining means for determining, based on the estimated first and second charge amounts, whether to hold the speed position or to change the speed position to the target speed position; and
speed position-setting means for setting the speed position based on a result of the determination by said speed change-determining means.

2. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:
first charge amount-estimating means for estimating a first charge amount, which is an amount of electric power charged into the storage battery when regeneration is performed by the electric motor for a predetermined regeneration time period in a state in which the speed position is held;
second charge amount-estimating means for estimating a second charge amount, which is an amount of electric power charged into the storage battery when the speed position is changed to a target speed position within the regeneration time period and the regeneration by the electric motor is performed until the regeneration time period elapses;
speed change-determining means for determining, based on the estimated first and second charge amounts, whether to hold the speed position or to change the speed position to the target speed position; and
speed position-setting means for setting the speed position based on a result of the determination by said speed change-determining means.

3. The control system according to claim 1 or 2, wherein the first charge amount is an amount of electric power charged into the storage battery when the regeneration by the electric motor is performed in the state in which the speed position is held, during deceleration of the hybrid vehicle, until the hybrid vehicle stops, and
wherein the second charge amount is an amount of electric power charged into the storage battery during deceleration of the hybrid vehicle when the speed position is changed to the target speed position before the hybrid vehicle stops, and the regeneration by the electric motor is performed until the hybrid vehicle stops.

4. The control system according to claim 3, further comprising brake control means for controlling an operation of a brake pedal of the hybrid vehicle in order to decelerate the hybrid vehicle, during deceleration of the hybrid vehicle and when said speed position-setting means is changing the speed position to the target speed position.

5. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:
first charge amount-estimating means for estimating a first charge amount, which is an amount of electric power charged into the storage battery assuming that regeneration is performed by the electric motor during deceleration of the hybrid vehicle until the hybrid vehicle stops, in a state in which the speed position is held;
speed change duration-estimating means for estimating a speed change duration, which is a time period required for a change of the speed position of the first transmission mechanism to a target speed position to be completed from when the change is started;
second charge amount-estimating means for estimating an amount of electric power which is charged into the storage battery when regeneration by the electric motor is performed in a state in which the speed position has been changed to the target speed position, for a time period from when the estimated speed change duration has elapsed to when the hybrid vehicle stops, as a second charge amount, which is an amount of electric power charged into the storage battery assuming that the speed position is changed to the target speed position before the hybrid vehicle stops during deceleration of the hybrid vehicle and the regeneration by the electric motor is performed until the hybrid vehicle stops;
speed change-determining means for determining, based on the estimated first and second charge amounts, whether to hold the speed position or to change the speed position to the target speed position; and
speed position-setting means for setting the speed position based on a result of the determination by said speed change-determining means.

6. The control system according to any one of claims 3 to 5, further comprising:
storage battery state-determining means for determining whether one of a first condition that a state of charge of the storage battery is not smaller than an upper limit value and a second condition that a temperature of the storage battery is not lower than a predetermined temperature is satisfied;
regeneration inhibiting means for inhibiting the regeneration by the electric motor when it is determined that one of the first and second condition is satisfied; and
brake control means for controlling an operation of a brake pedal of the hybrid vehicle during deceleration of the hybrid vehicle, in order to decelerate the hybrid vehicle when the regeneration by the electric motor is inhibited by said regeneration inhibiting means.

7. The control system according to claim 3 or 6, wherein during deceleration of the hybrid vehicle, when it is determined that the speed position should be changed to the target speed position, said speed position-setting means starts the change of the speed position to the target speed position at a timing at which an operation amount of a brake pedal of the hybrid vehicle is reduced by not less than a predetermined value.

8. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:
lost regenerative electric energy-predicting means for predicting, according to a brake pedal stepping force of a brake pedal of the hybrid vehicle and a speed of the hybrid vehicle, lost regenerative electric energy which is electric energy incapable of being regenerated due to interruption of transmission of motive power in the first transmission mechanism, caused by a change in the speed position of the first transmission mechanism, assuming that during deceleration of the hybrid vehicle, the speed position of the first transmission mechanism is changed and regeneration by the electric motor is performed; and
speed position change-inhibiting means for inhibiting a change in the speed position when the predicted lost regenerative electric energy is larger than a predetermined value, in a case where the regeneration by the electric motor is performed during deceleration of the hybrid vehicle.

9. A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:
estimating a first charge amount, which is an amount of electric power charged into the storage battery assuming that regeneration is performed by the electric motor during deceleration of the hybrid vehicle until the hybrid vehicle stops, in a state in which the speed position is held;
estimating a speed change duration, which is a time period required for a change of the speed position of the first transmission mechanism to a target speed position to be completed from when the change is started;
estimating an amount of electric power which is charged into the storage battery when regeneration by the electric motor is performed in a state in which the speed position has been changed to the target speed position, for a time period from when the estimated speed change duration has elapsed to when the hybrid vehicle stops, as a second charge amount, which is an amount of electric power charged into the storage battery assuming that the speed position is changed to the target speed position before the hybrid vehicle stops during deceleration of the hybrid vehicle and the regeneration by the electric motor is performed until the hybrid vehicle stops;
determining, based on the estimated first and second charge amounts, whether to hold the speed position or to change the speed position to the target speed position; and
setting the speed position based on a result of the determination.

10. A control system for a hybrid vehicle including an internal combustion engine and an electric motor capable of generating electric power, as motive power sources, a storage battery capable of supplying and receiving electric power to and from the electric motor, and a transmission mechanism capable of transmitting input motive power to drive wheels in a state in which a speed of the motive power is changed in one of a plurality of speed positions, the control system comprising:
charging-preferred travel-executing means for executing, when a state of charge of the storage battery becomes lower than a predetermined first lower limit value, charging-preferred travel in which the engine is operated in a vicinity of an optimum fuel economy line and regeneration by the electric motor using part of the motive power of the engine is performed in order to restore the state of charge of the storage battery;
total efficiency-calculating means for calculating a total efficiency of the hybrid vehicle for each speed position; and
speed position-selecting means for selecting a speed position which is largest in the calculated total efficiency, from the plurality of speed positions, when executing the charging-preferred travel.

11. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the control system comprising:
charging-preferred travel-executing means for executing, when a state of charge of the storage battery becomes lower than a predetermined first lower limit value, charging-preferred travel in which the engine is operated in a vicinity of an optimum fuel economy line and regeneration by the electric motor using part of the motive power of the engine is performed in order to restore the state of charge of the storage battery;
total efficiency-calculating means for calculating a total efficiency of the hybrid vehicle for each speed position; and
speed position-selecting means for selecting a speed position which is largest in the calculated total efficiency, from the plurality of speed positions, when executing the charging-preferred travel.

12. The control system according to claim 10 or 11, further comprising:
required electric power-calculating means for calculating required electric power required for restoring a state of charge of the storage battery up to a predetermined target state of charge within a predetermined time period when the state of charge of the storage battery becomes lower than the first lower limit value; and
preliminary selection means for preliminarily selecting a plurality of speed positions which are capable of generating the calculated required electric power by regeneration by the electric motor, from the plurality of speed positions, and
wherein said speed position-selecting means finally selects the speed position which is largest in the total efficiency from the selected plurality of speed positions.

13. The control system according to claim 11, wherein in a state in which the first clutch is disengaged and also the second clutch is engaged, the motive power of the second input shaft is transmitted to the first input shaft via the second transmission mechanism and the first transmission mechanism, and
wherein during the charging-preferred travel, in a state in which a speed of the motive power of the engine is changed by the second transmission mechanism, when the state of charge of the storage battery becomes lower than a predetermined second lower limit value lower than the first lower limit value, said speed position-selecting means shifts the speed position of the second transmission mechanism to a speed position higher by one stage, and selects a speed position which is largest in charging efficiency of the storage battery when regeneration by the electric motor is performed, from the plurality of speed positions of the first transmission mechanism.

14. The control system according to claim 10 or 11, wherein when an amount of change in an accelerator pedal opening is larger than a predetermined value, motive power-preferred travel in which the motive power of the engine is given preference is executed in place of the charging-preferred travel.

15. The control system according to claim 10 or 11, wherein when the state of charge of the storage battery is lower than the first lower limit value, stoppage of the engine is inhibited.

16. The control system according to claim 10 or 11, wherein during EV traveling in which the hybrid vehicle travels using motive power of the electric motor in a stopped state of the engine, when the state of charge of the storage battery becomes lower than the first lower limit value, the engine is started using the motive power of the electric motor.

17. A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism, the method comprising:
executing, when the state of charge of the storage battery becomes lower than a predetermined first lower limit value, charging-preferred travel in which the engine is operated in a vicinity of an optimum fuel economy line and regeneration by the electric motor using part of the motive power of the engine is performed, in order to restore a state of charge of the storage battery;
calculating a total efficiency of the hybrid vehicle for each speed position;
calculating required electric power required for restoring a state of charge of the storage battery up to a predetermined target state of charge within a predetermined time period;
preliminarily selecting a plurality of speed positions which are capable of generating the calculated required electric power by regeneration by the electric motor, from the plurality of speed positions; and
finally selecting a speed position which is largest in the calculated total efficiency from the selected plurality of speed positions when executing the charging-preferred travel.

18. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism,
wherein travel modes of the hybrid vehicle include an engine travel mode in which the hybrid vehicle travels using only the motive power of the engine, an assist travel mode in which the hybrid vehicle travels while having the motive power of the engine assisted with motive power of the electric motor, and a charge travel mode in which the hybrid vehicle travels while performing electric charging with the electric motor and the storage battery using part of the motive power of the engine,
the control system comprising:
travel region-setting means for setting an engine travel region, which is a region that makes it possible to obtain small fuel consumption in the engine travel mode out of the travel modes, an assist travel region, which is a region that makes it possible to obtain small fuel consumption in the assist travel mode out of the travel modes, and a charge travel region, which is a region that makes it possible to obtain small fuel consumption in the charge travel mode out of the travel modes, with respect to a speed of the hybrid vehicle and a required driving force required for the drive wheels, in association with each speed position for the motive power of the engine; and
selection means for selecting a travel mode associated with a travel region to which a combination of the speed of the hybrid vehicle and the required driving force belongs, and selecting a speed position which is smallest in fuel consumption as a speed position for the motive power of the engine.

19. The control system according to claim 18, wherein when the hybrid vehicle is in the engine travel mode, the fuel consumption is calculated using engine driving parameters which are an amount of fuel supplied to the engine for traveling of the hybrid vehicle, efficiency of the engine, and efficiencies of the first and second transmission mechanisms, when the hybrid vehicle is in the assist travel mode; the fuel consumption is calculated using not only the engine driving parameters but also an amount of fuel supplied to the engine in the past in order to charge the storage battery with electric power for assist traveling, discharging efficiency of the storage battery, the driving efficiency of the electric motor, and the efficiencies of the first and second transmission mechanisms; and when the hybrid vehicle is in the charge travel mode, the fuel consumption is calculated using not only the engine driving parameters but also an amount of fuel supplied to the engine in order to charge the storage battery with electric power generated by the electric motor, the efficiency of the engine, the efficiencies of the first and second transmission mechanisms, power generation efficiency of the electric motor, charging efficiency of the storage battery, and predicted efficiency, which is efficiency predicted to be exhibited when an amount of electric power charged in the storage battery is used for traveling of the hybrid vehicle in the future.

20. A control system for a hybrid vehicle including an internal combustion engine and an electric motor capable of generating electric power, as motive power sources, a storage battery capable of supplying and receiving electric power to and from the electric motor, and a transmission mechanism capable of transmitting input motive power to drive wheels in a state in which a speed of the motive power is changed in one of a plurality of speed positions,
wherein travel modes of the hybrid vehicle include an engine travel mode in which the hybrid vehicle travels using only the motive power of the engine, an assist travel mode in which the hybrid vehicle travels while having the motive power of the engine assisted with motive power of the electric motor, and a charge travel mode in which the hybrid vehicle travels while performing electric charging with the electric motor and the storage battery using part of the motive power of the engine,
the control system comprising:
travel region-setting means for setting, with respect to a speed of the hybrid vehicle and a required driving force required for the drive wheels, for each speed position, an engine travel region, which includes an optimum fuel economy line at which fuel consumption of the engine is minimized and makes it possible to obtain small fuel consumption in the engine travel mode out of the travel modes, an assist travel region arranged on a side of the engine travel region where the required driving force is larger than in the engine travel region, and a charge travel region arranged on a side of the engine travel region where the required driving force is smaller than in the engine travel region; and
selection means for selecting the engine travel mode as the travel mode, when a combination of the speed of the hybrid vehicle and the required driving force belongs to the engine travel region.

21. A control system for a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism,
wherein travel modes of the hybrid vehicle include an engine travel mode in which the hybrid vehicle travels using only the motive power of the engine, an assist travel mode in which the hybrid vehicle travels while having the motive power of the engine assisted with motive power of the electric motor, and a charge travel mode in which the hybrid vehicle travels while performing electric charging with the electric motor and the storage battery using part of the motive power of the engine,
the control system comprising:
travel region-setting means for setting, with respect to a speed of the hybrid vehicle and a required driving force required for the drive wheels, for each speed position for the motive power of the engine, an engine travel region, which includes an optimum fuel economy line at which fuel consumption of the engine is minimized and makes it possible to obtain small fuel consumption in the engine travel mode out of the travel modes, an assist travel region arranged on a side of the engine travel region where the required driving force is larger than in the engine travel region, and a charge travel region arranged on a side of the engine travel region where the required driving force is smaller than in the engine travel region; and
selection means for selecting the engine travel mode as the travel mode, when a combination of the speed of the hybrid vehicle and the required driving force belongs to the engine travel region.

22. The control system according to claim 18 or 21, wherein when the speed position for the motive power of the engine is a speed position of the second transmission mechanism, the assist travel region and the charge travel region for the speed position are divided into a plurality of regions in association with speed-changing patterns, respectively, which are each a combination of a speed position for the motive power of the engine and a speed position for motive power of the electric motor in the first transmission mechanism and make it possible to obtain smallest fuel consumption, and
wherein said selection means selects a speed-changing pattern associated with a region to which a combination of the speed of the hybrid vehicle and the required driving force belongs, out of the plurality of regions.

23. The control system according to any one of claims 18 to 22, wherein when a temperature of at least one of the electric motor and the storage battery is not lower than a predetermined temperature set for the at least one of the electric motor and the storage battery, an output from the electric motor is limited.

24. The control system according to any one of claims 18 to 23, wherein when a state of charge of the storage battery is not larger than a predetermined value, an operation of the electric motor is controlled such that an amount of regeneration by the electric motor is increased.

25. The control system according to claim 22, wherein in the case where the speed position for the motive power of the engine is a speed position of the second transmission mechanism, when an amount of change in a degree of opening of an accelerator pedal is larger than a predetermined value, an assist travel mode is selected which uses a lower speed position of the first transmission mechanism than the speed position for the motive power of the engine as a speed position for the motive power of the electric motor.

26. A method of controlling a hybrid vehicle including an internal combustion engine, an electric motor capable of generating electric power, a storage battery capable of supplying and receiving electric power to and from the electric motor, a first transmission mechanism that is capable of receiving motive power from an engine output shaft of the engine and the electric motor by a first input shaft, and transmitting the motive power to drive wheels in a state in which a speed of the motive power is changed in one of a plurality of speed positions, a second transmission mechanism that is capable of receiving motive power from the engine output shaft by a second input shaft, and transmitting the motive power to the drive wheels in a state in which a speed of the motive power is changed in one of a plurality of speed positions, a first clutch that is capable of engaging between the engine output shaft and the first transmission mechanism, and a second clutch that is capable of engaging between the engine output shaft and the second transmission mechanism,
wherein travel modes of the hybrid vehicle include an engine travel mode in which the hybrid vehicle travels using only the motive power of the engine, an assist travel mode in which the hybrid vehicle travels while having the motive power of the engine assisted with motive power of the electric motor, and a charge travel mode in which the hybrid vehicle travels while performing electric charging with the electric motor and the storage battery using part of the motive power of the engine,
the method comprising:
setting, with respect to a speed of the hybrid vehicle and required driving force required for the drive wheels, for each speed position for the motive power of the engine, an assist inhibiting line which connects points where fuel consumption obtained in the engine travel mode and fuel consumption obtained in the assist travel mode match each other, on a side of an optimum fuel economy line at which fuel consumption of the engine is minimized, where a required driving force is larger than on the optimum fuel economy line, and setting a charge inhibiting line which connects points where the fuel consumption obtained in the engine travel mode and fuel consumption obtained in the charge travel mode match each other, on a side of the optimum fuel economy line, where the required driving force is smaller than on the optimum fuel economy line; and
selecting, according to the speed position for the motive power of the engine, the speed of the hybrid vehicle, and the required driving force, the engine travel mode when the required driving force is not above the assist inhibiting line and is not below the charge inhibiting line, the assist travel mode when the required driving force is above the assist inhibiting line, and the charge travel mode when the required driving force is below the charge inhibiting line.

27. The control system according to any one of claims 1, 2, 10, 11, and 18 to 24, wherein the hybrid vehicle is equipped with a car navigation system storing data indicative of information on a road on which the hybrid vehicle is traveling and neighborhood roads,
the control system further comprising prediction means for predicting a traveling situation of the hybrid vehicle based on the data stored in the car navigation system, and
wherein selection of the travel mode is performed according to the predicted traveling situation of the hybrid vehicle.
